# EUROPÄISCHE PATENTSCHRIFT

(11) **EP 4 512 040 B1**
(45) Veröffentlichungstag und Bekanntmachung des Hinweises auf die Patenterteilung: **28.01.2026**
(21) Anmeldenummer: 23721851.6
(22) Anmeldetag: 21.04.2023
(51) Int. Cl.: H04L 9/40, H04L 9/32, H04L 67/12, G05B 15/02, G05B 23/02, G06F 21/64, G05B 19/042

(54) **VERFAHREN ZUM STEUERN EINER EINRICHTUNG, VERFAHREN ZUM SENDEN VON BETRIEBSDATEN EINER EINRICHTUNG, KOMMUNIKATIONSVORRICHTUNG ZUR VERWENDUNG IN SOLCHEN VERFAHREN, COMPUTERPROGRAMM, COMPUTERLESBARES MEDIUM SOWIE DATENTRÄGERSIGNAL**
METHOD FOR CONTROLLING A DEVICE, METHOD FOR TRANSMITTING OPERATING DATA OF A DEVICE, COMMUNICATION APPARATUS FOR USE IN SUCH METHODS, COMPUTER PROGRAM, COMPUTER-READABLE MEDIUM, AND DATA CARRIER SIGNAL
PROCÉDÉ POUR ASSURER LA COMMANDE D'UN DISPOSITIF, PROCÉDÉ POUR ENVOYER DES DONNÉES DE FONCTIONNEMENT D'UN DISPOSITIF, DISPOSITIF DE COMMUNICATION DESTINÉ À ÊTRE UTILISÉ DANS DE TELS PROCÉDÉS, PROGRAMME INFORMATIQUE, SUPPORT LISIBLE PAR ORDINATEUR ET SIGNAL DE SUPPORT DE DONNÉES

(30) Priorität: 21.04.2022 DE 102022109649
(43) Veröffentlichungstag der Anmeldung: 26.02.2025
(73) Patentinhaber: UMH Systems GmbH, 50825 Köln (DE)
(72) Erfinder: THEOCHARIS, Jeremy, 52074 Aachen (DE); LINNENBERG, Ferdinand, 52074 Aachen (DE)
(74) Vertreter: Cohausz & Florack
(86) Internationale Anmeldenummer: PCT/EP2023/060459
(87) Internationale Veröffentlichungsnummer: WO 2023/203205

(56) Entgegenhaltungen:
- EP-A1- 1 818 727
- EP-A1- 3 958 071
- EP-A2- 3 125 200
- US-A1- 2016 224 048
- US-A1- 2018 183 769
- US-A1- 2020 106 743

## Beschreibung

Die Erfindung betrifft ein Verfahren zum Steuern einer Einrichtung, ein Verfahren zum Senden von Betriebsdaten einer Einrichtung, eine Kommunikationsvorrichtung zur Verwendung in solchen Verfahren, ein Computerprogramm, ein computerlesbares Medium sowie ein Datenträgersignal.

Das Internet of Things, kurz "loT", gewinnt vor Allem in der industriellen Anwendung immer mehr an Bedeutung und wird in diesem Zusammenhang auch als Industrial Internet of Things, kurz "IIoT", bezeichnet. Die technische Umsetzung des loT beziehungsweise IloT erfolgt meist mit Hilfe von sogenannten loT- beziehungsweise IIoT-Plattformen, die die informations- und kommunikationstechnische Vernetzung von durch Hardware und/oder Software realisierten Teilnehmern ermöglichen sollen. So kann beispielsweise ein Maschinenführer oder ein sonstiger Bediener eine Maschine, wie eine Drehmaschine, CNC-Maschine, Druckmaschine oder Abfüllmaschine, mittels eines Smartphones oder Laptops über das Internet fernsteuern und/oder deren Betrieb überwachen. Weitere Beispiele für IIoT-Teilnehmer, also Einrichtungen, die über IIoT-Plattformen vernetzbar sind, umfassen flexible Fertigungszellen, flexible Fertigungssysteme, flexible oder starre Transferstraßen, Kraftwerke, Wasserkraftanlagen, Windkraftanlagen, Solaranlagen, Photovoltaikanlagen, Kläranlagen, Hochöfen, Stahlwerke, Gießereien, Walzwerke, Erdölraffinerien und Aluminiumhütten sowie mit in einer Cloud gehosteten Anwendungen, wie Datenbanken, und/oder Enterprise-Resource-Planning-Systeme, kurz "ERP-Systeme".

Die Aufgabe der Erfindung besteht darin, die für loT- und insbesondere IIoT-Plattformen erforderliche informations- und kommunikationstechnische Vernetzung und

Datenübertragung sicherer und/oder einfacher zu gestalten.

EP3 125 200 A2 offenbart das Empfangen eines digitalen Schlüssels und im Fall einer positiven Verifizierung des digitalen Schlüssels das Durchführen einer Aktion gemäß dem digitalen Schlüssel. Die Aktion kann das Öffnen einer Tür zum Liefern von Paketen sein. Der digitale Schlüssel enthält eine Berechtigungsinformation (z. B. LockID, ActionlD) und eine Prüfinformation (z.B. kryptographische Signatur).

US 2016/224048 A1 offenbart ein sicheres industrielles Steuersystem, das einen Aktionsurheber, einen Aktionsauthentifikator und ein industrielles Element/eine industrielle Steuerung (z. B. Stromversorgung) umfasst. Der Aktionsauthentifikator signiert/verschlüsselt eine Aktionsanforderung und das industrielle Element/die industrielle Steuerung verifiziert eine signierte Aktionsanforderung und/oder entschlüsselt eine verschlüsselte Aktionsanforderung.

US 2020/106743 A1 offenbart das Schützen eines loT-Systems durch Einfügen einer oder mehrerer Sicherheitsvorrichtungen. Eine Sicherheitsvorrichtung überwacht und detektiert nicht autorisierte Steuerbefehle von nicht autorisierten Quellen innerhalb des loT-Systems.

EP 3 958 071 A1 offenbart, dass ein Edge-Gerät einer Automatisierungsanlage (z. B. Produktions- oder Fertigungsanlage) Nutzungsdaten an ein Cloud-System überträgt. Das Edge-Gerät signiert und verschlüsselt optional die Nutzungsdaten.

US 2018/183769 A1 offenbart, dass ein Gateway ein Überwachungssignal (d. h. einen Parameter) einer lokalen Steuerung erhält, das Überwachungssignal verschlüsselt und signiert und die digitale Signatur an einen Server bereitstellt.

Vor diesem Hintergrund schlägt die Erfindung die Gegenstände der unabhängigen Ansprüche vor. Vorteilhafte Ausführungsformen der Erfindung sind in den abhängigen Ansprüchen beschrieben.

Die Erfindung schlägt gemäß einem ersten Aspekt ein Verfahren zum Steuern einer Einrichtung vor, wobei
- eine Kommunikationsvorrichtung mit der Einrichtung verbunden ist oder wird;
- in einem Schritt S1 die Kommunikationsvorrichtung einen Klartext und eine Signatur von einer Absendervorrichtung empfängt;
- in einem Schritt S2 die Kommunikationsvorrichtung einen ersten Identifikator, der der Absendervorrichtung zugeordnet ist, und einen ersten Chiffrierschlüssel unter Verwendung eines gültigen ersten Zertifikats verifiziert und das Verfahren abbricht, falls das Ergebnis dieser Verifikation negativ ist;
- in einem Schritt S3 die Kommunikationsvorrichtung die empfangene Signatur und den empfangenen Klartext unter Verwendung des ersten Chiffrierschlüssels verifiziert und das Verfahren abbricht, falls das Ergebnis dieser Verifikation negativ ist;
- in einem Schritt S4 die Kommunikationsvorrichtung prüft, ob eine Steueranweisung für die Einrichtung in dem Klartext enthalten ist, und das Verfahren abbricht, falls das Ergebnis dieser Prüfung negativ ist;
- in einem Schritt S5 die Kommunikationsvorrichtung prüft, ob eine Berechtigung für die Steueranweisung dem ersten Chiffrierschlüssel und/oder dem ersten Identifikator zugeordnet ist, und das Verfahren abbricht, falls das Ergebnis dieser Prüfung negativ ist;
- in einem Schritt S6 die Kommunikationsvorrichtung einen Steuerbefehl für die Einrichtung unter Verwendung der Steueranweisung, die in dem wiederhergestellten Klartext enthalten ist, erzeugt; und
- in einem Schritt S7 die Kommunikationsvorrichtung den Steuerbefehl an die Einrichtung sendet, wodurch die Einrichtung gesteuert wird.

Das gemäß diesem Aspekt vorgeschlagene Verfahren, das im Rahmen der vorliegenden Erfindung auch als Steuerverfahren bezeichnet wird, ermöglicht eine sichere informations- und kommunikationstechnische Vernetzung und Datenübertragung zwischen der Absendervorrichtung und der Einrichtung. Außerdem kann für diese Datenübertragung auf die Verwendung eines virtuellen privaten Netzwerks, kurz "VPN", verzichtet werden, ohne dass die Sicherheit der Datenübertragung gefährdet wird. Ein VPN ist mit einem hohen technischen Aufwand in Bezug auf die erforderliche Hardware und Software verbunden.

Die Einrichtung und die Absendervorrichtung können nach Bedarf auf beliebige Weise ausgebildet sein und jeweils beispielsweise wenigstens ein Messgerät, wenigstens eine Maschine, wenigstens einen Computer, wenigstens eine Produktionsanlage, wenigstens ein technisches System und/oder wenigstens einen der eingangs genannten IIoT-Teilnehmer umfassen.

Das beschrieben Verfahren gemäß irgendeinem der Aspekte kann beispielsweise durch eine Vorrichtung durchgeführt werden. Eine Vorrichtung, insbesondere ein Computer, der beispielsweise ein Verfahren oder einen oder mehrere Verfahrenschritte eines der beschriebenen Verfahren ausführt oder ausführen kann oder Mittel zu deren Ausführung aufweist, kann mindestens einen Prozessor und mindestens einen Speicher umfassen, in dem Befehle gespeichert sind, die, wenn sie von dem mindestens einen Prozessor ausgeführt werden, die Vorrichtung veranlassen, zumindest die angegebenen Schritte durchzuführen. Die Vorrichtung kann beispielsweise die Einrichtung und/oder die Kommunikationsvorrichtung umfassen. Beispielsweise können die Einrichtung und die Kommunikationsvorrichtung physisch oder virtuell getrennte Einheiten der Vorrichtung sein.

Im Rahmen der vorliegenden Erfindung ist mit dem Begriff "Signatur" ein Datensatz, ein Wert, eine Zahl oder eine Zeichenfolge gemeint, wohingegen mit dem Begriff "Signaturdatei" eine Datei gemeint ist, die wenigstens eine Signatur enthält und optional einen Metadaten-Bereich aufweist, der weitere Daten, insbesondere Metadaten, enthält. Derartige Signaturen sind beispielsweise in dem Wikipedia-Artikel "Digitale Signatur" beschrieben.

Im Rahmen der vorliegenden Erfindung ist mit dem Begriff "Schlüssel" ein Datensatz, Wert, eine Zahl oder Zeichenfolge gemeint, wohingegen mit dem Begriff "Schlüsseldatei" eine Datei gemeint ist, die wenigstens einen Schlüssel enthält und optional einen Metadaten-Bereich aufweist, der weitere Daten, insbesondere Metadaten, enthält. Dies gilt analog für die Begriffe "Chiffrierschlüssel" und "Chiffrierschlüsseldatei" sowie "Dechiffrierschlüssel" und "Dechiffrierschlüsseldatei". Falls beispielsweise ein Chiffrierschlüssel und eine Dechiffrierschlüssel gemäß dem RSA-Kryptosystem ausgebildet sind, dann ist jeder dieser Schlüssel ein Datensatz, der ein Zahlenpaar umfasst. Jeder Schlüssel, Chiffrierschlüssel und Dechiffrierschlüssel sowie jede Schlüsseldatei, Chiffrierschlüsseldatei und Dechiffrierschlüsseldatei kann nach Bedarf auf beliebige Weise ausgebildet sein, beispielsweise entsprechend den Standards für asymmetrische Kryptographie, kurz "PKCS".

Im Rahmen der vorliegenden Erfindung ist mit dem Begriff "Zertifikat" ein digitales Zertifikat, das beispielsweise gemäß Standards der ITU-T oder der IETF ausgebildet ist.

Das Empfangen in Schritt S1 kann nach Bedarf auf beliebige Weise erfolgen, beispielsweise indem die Absendervorrichtung eine Datei, die den Klartext enthält, sowie eine Signaturdatei, die die Signatur enthält, oder lediglich eine Signaturdatei, die die Signatur und als Metadaten den Klartext enthält, an die Kommunikationsvorrichtung sendet. Diese Übertragung erfolgt beispielhaft über ein VPN.

Das Verifizieren in Schritt S3 kann nach Bedarf auf beliebige Weise erfolgen, beispielsweise derart, dass unter Verwendung des ersten Chiffrierschlüssels geprüft wird, ob die empfangene Signatur zu dem empfangenen Klartext passt.

In einer beispielhaften Ausführungsform der Erfindung ist bestimmt, dass die Absendervorrichtung
- einen Klartext, der eine Steueranweisung für die Einrichtung enthält, unter Verwendung eines nullten Dechiffrierschlüssels, der mit dem nullten Chiffrierschlüssel korrespondiert, signiert hat oder signiert, wodurch die Signatur erzeugt worden ist oder wird, und
- den Klartext und die Signatur an die Kommunikationsvorrichtung gesendet hat oder sendet.

Die Erfindung schlägt gemäß einem zweiten Aspekt ein Verfahren zum Steuern einer Einrichtung vor, wobei
- eine Kommunikationsvorrichtung mit der Einrichtung verbunden ist oder wird;
- in einem Schritt S8 die Kommunikationsvorrichtung einen Geheimtext und eine Signatur von einer Absendervorrichtung empfängt, wobei der Geheimtext einen verschlüsselten Klartext darstellt;
- in einem Schritt S9 die Kommunikationsvorrichtung einen ersten Identifikator, der der Absendervorrichtung zugeordnet ist, und einen ersten Chiffrierschlüssel unter Verwendung eines gültigen ersten Zertifikats verifiziert und das Verfahren abbricht, falls das Ergebnis dieser Verifikation negativ ist;
- in einem Schritt S10 die Kommunikationsvorrichtung den empfangenen Geheimtext unter Verwendung eines zweiten Dechiffrierschlüssels, der der Kommunikationsvorrichtung zugeordnet ist, entschlüsselt, wodurch der Klartext wiederhergestellt wird;
- in einem Schritt S11 die Kommunikationsvorrichtung die empfangene Signatur und den empfangenen Geheimtext oder die empfangene Signatur und den wiederhergestellten Klartext unter Verwendung des ersten Chiffrierschlüssels verifiziert und das Verfahren abbricht, falls das Ergebnis dieser Verifikation negativ ist;
- in einem Schritt S12 die Kommunikationsvorrichtung prüft, ob eine Steueranweisung für die Einrichtung in dem Klartext enthalten ist, und das Verfahren abbricht, falls das Ergebnis dieser Prüfung negativ ist;
- in einem Schritt S13 die Kommunikationsvorrichtung prüft, ob eine Berechtigung für die Steueranweisung dem ersten Chiffrierschlüssel und/oder dem ersten Identifikator zugeordnet ist, und das Verfahren abbricht, falls das Ergebnis dieser Prüfung negativ ist;
- in einem Schritt S14 die Kommunikationsvorrichtung einen Steuerbefehl für die Einrichtung unter Verwendung der Steueranweisung, die in dem wiederhergestellten Klartext enthalten ist, erzeugt; und
- in einem Schritt S15 die Kommunikationsvorrichtung den Steuerbefehl an die Einrichtung sendet, wodurch die Einrichtung gesteuert wird.

Das gemäß diesem Aspekt vorgeschlagene Verfahren, das im Rahmen der vorliegenden Erfindung auch als Steuerverfahren bezeichnet wird, ermöglicht eine sichere informations- und kommunikationstechnische Vernetzung und Datenübertragung zwischen der Absendervorrichtung und der Einrichtung. Außerdem kann auf die Verwendung eines VPN für diese Datenübertragung verzichtet werden, ohne dass die Sicherheit der Datenübertragung gefährdet wird.

Das Empfangen in Schritt S8 kann nach Bedarf auf beliebige Weise erfolgen, beispielsweise indem die Absendervorrichtung eine Datei, die den Geheimtext enthält, sowie eine Signaturdatei, die die Signatur enthält, oder lediglich eine Signaturdatei, die die Signatur und als Metadaten den Geheimtext enthält, an die Kommunikationsvorrichtung sendet. Diese Übertragung erfolgt beispielhaft über ein VPN.

Das Verifizieren in Schritt S2 und S9 kann nach Bedarf auf beliebige Weise erfolgen, beispielsweise derart, dass unter Verwendung des ersten Zertifikats geprüft wird, ob der erste Chiffrierschlüssel zu dem ersten Identifikator passt, und/oder unter Verwendung wenigstens eines zusätzlichen gültigen Zertifikats.

Das Verifizieren in Schritt S11 kann nach Bedarf auf beliebige Weise erfolgen, beispielsweise derart, dass unter Verwendung des ersten Chiffrierschlüssels geprüft wird, ob die empfangene Signatur zu dem empfangenen Geheimtext oder zu dem wiederhergestellten Klartext passt.

Das Erzeugen in Schritt S6 und S14 kann nach Bedarf auf beliebige Weise erfolgen, beispielsweise mit Hilfe einer Lookup-Tabelle und/oder einer Datenbank.

In einer beispielhaften Ausführungsform der Erfindung ist bestimmt, dass die Absendervorrichtung
- einen Klartext, der eine Steueranweisung für die Einrichtung enthält, unter Verwendung eines zweiten Chiffrierschlüssels, der mit dem zweiten Dechiffrierschlüssel korrespondiert, verschlüsselt hat oder verschlüsselt, wodurch der Geheimtext erzeugt worden ist oder wird,
- den Klartext oder den Geheimtext unter Verwendung eines ersten Dechiffrierschlüssels, der mit dem ersten Chiffrierschlüssel korrespondiert, signiert hat oder signiert, wodurch die Signatur erzeugt worden ist oder wird, und
- den Geheimtext und die Signatur an die Kommunikationsvorrichtung gesendet hat oder sendet.

In einer beispielhaften Ausführungsform der Erfindung ist bestimmt, dass
- der erste Chiffrierschlüssel in der Kommunikationsvorrichtung gespeichert ist oder wird; und/oder
- der erste Chiffrierschlüssel in dem Klartext und/oder in einer die Signatur enthaltenden Signaturdatei enthalten ist und die Kommunikationsvorrichtung den ersten Chiffrierschlüssel aus dem Klartext und/oder aus der Signaturdatei extrahiert; und/oder
- die Kommunikationsvorrichtung den ersten Chiffrierschlüssel empfangen hat oder empfängt, insbesondere durch Herunterladen von einem Schlüsselserver.

Der erste Chiffrierschlüssel ist beispielhaft in einem Metadaten-Bereich der Signaturdatei enthalten, und dann extrahiert die Kommunikationsvorrichtung den ersten Chiffrierschlüssel aus dem Metadaten-Bereich.

In einer beispielhaften Ausführungsform der Erfindung ist bestimmt, dass das Prüfen gemäß Schritt S5 oder S13 erfolgt, indem die Kommunikationsvorrichtung prüft, ob die Berechtigung in dem ersten Chiffrierschlüssel, insbesondere in einem Metadaten-Bereich des ersten Chiffrierschlüssels, enthalten ist und/oder in einer Konfigurationsdatei dem ersten Chiffrierschlüssel und/oder dem ersten Identifikator zugeordnet ist.

In einer beispielhaften Ausführungsform der Erfindung ist bestimmt, dass in einem Schritt S16 die Kommunikationsvorrichtung prüft, ob die Konfigurationsdatei unter Verwendung eines gültigen zweiten Zertifikats signiert worden ist, und das Verfahren abbricht, falls das Ergebnis dieser Prüfung negativ ist.

Das Prüfen in Schritt S16 kann nach Bedarf auf beliebige Weise erfolgen, beispielsweise unter Verwendung wenigstens eines zusätzlichen gültigen Zertifikats.

In einer beispielhaften Ausführungsform der Erfindung ist bestimmt, dass das Senden gemäß Schritt S7 oder S15 umfasst, dass die Kommunikationsvorrichtung
- den Steuerbefehl unter Verwendung eines dritten Chiffrierschlüssels, der der Einrichtung zugeordnet ist, verschlüsselt, und
- den verschlüsselten Steuerbefehl an die Einrichtung sendet.

Hierdurch wird die Sicherheit der Datenübertragung zwischen der Absendervorrichtung und der Einrichtung erhöht.

In einer beispielhaften Ausführungsform der Erfindung ist bestimmt, dass die Einrichtung den empfangenen verschlüsselten Steuerbefehl unter Verwendung eines dritten Dechiffrierschlüssels, der mit dem dritten Chiffrierschlüssel korrespondiert, entschlüsselt, wodurch der Steuerbefehl wiederhergestellt wird.

In einer beispielhaften Ausführungsform der Erfindung ist bestimmt, dass das Senden gemäß Schritt S7 oder S15 umfasst, dass die Kommunikationsvorrichtung
- den Steuerbefehl unter Verwendung des zweiten Dechiffrierschlüssels oder eines vierten Dechiffrierschlüssels, der der Kommunikationsvorrichtung zugeordnet ist, signiert, wodurch eine Signatur erzeugt wird, und
- den Steuerbefehl und die Signatur an die Einrichtung sendet.

Hierdurch wird die Sicherheit der Datenübertragung zwischen der Absendervorrichtung und der Einrichtung erhöht.

Der vierte Dechiffrierschlüssel kann nach Bedarf auf beliebige Weise ausgebildet sein, beispielsweise unterschiedlich zu dem zweiten Dechiffrierschlüssel oder gleich dem zweiten Dechiffrierschlüssel.

In einer beispielhaften Ausführungsform der Erfindung ist bestimmt, dass die Einrichtung den empfangenen Steuerbefehl und die empfangene Signatur unter Verwendung des zweiten Chiffrierschlüssels oder eines vierten Chiffrierschlüssels, der mit dem vierten Dechiffrierschlüssel korrespondiert, verifiziert und das Verfahren abbricht, falls das Ergebnis dieser Verifikation negativ ist.

Dieses Verifizieren kann nach Bedarf auf beliebige Weise erfolgen, beispielsweise derart, dass unter Verwendung des zweiten oder vierten Chiffrierschlüssels geprüft wird, ob die empfangene Signatur zu dem empfangenen Steuerbefehl passt.

Der vierte Chiffrierschlüssel kann nach Bedarf auf beliebige Weise ausgebildet sein, beispielsweise unterschiedlich zu dem zweiten Chiffrierschlüssel oder gleich dem zweiten Chiffrierschlüssel.

In einer beispielhaften Ausführungsform der Erfindung ist bestimmt, dass das Senden gemäß Schritt S7 oder S15 umfasst, dass die Kommunikationsvorrichtung
- den Steuerbefehl unter Verwendung eines dritten Chiffrierschlüssels, der der Einrichtung zugeordnet ist, verschlüsselt,
- den Steuerbefehl oder den verschlüsselten Steuerbefehl unter Verwendung des zweiten Dechiffrierschlüssels oder eines vierten Dechiffrierschlüssels, der der Kommunikationsvorrichtung zugeordnet ist, signiert, wodurch eine Signatur erzeugt wird, und
- den verschlüsselten Steuerbefehl und die Signatur an die Einrichtung sendet.

Hierdurch wird die Sicherheit der Datenübertragung zwischen der Absendervorrichtung und der Einrichtung erhöht.

In einer beispielhaften Ausführungsform der Erfindung ist bestimmt, dass die Einrichtung
- den empfangenen verschlüsselten Steuerbefehl unter Verwendung eines dritten Dechiffrierschlüssels, der mit dem dritten Chiffrierschlüssel korrespondiert, entschlüsselt, wodurch der Steuerbefehl wiederhergestellt wird, und
- den empfangenen verschlüsselten Steuerbefehl und die empfangene Signatur oder den wiederhergestellten Steuerbefehl und die empfangene Signatur unter Verwendung des zweiten Chiffrierschlüssels oder eines vierten Chiffrierschlüssels, der mit dem vierten Dechiffrierschlüssel korrespondiert, verifiziert und das Verfahren abbricht, falls das Ergebnis dieser Verifikation negativ ist.

Dieses Verifizieren kann nach Bedarf auf beliebige Weise erfolgen, beispielsweise derart, dass unter Verwendung des zweiten oder vierten Chiffrierschlüssels geprüft wird, ob die empfangene Signatur zu dem empfangenen verschlüsselten Steuerbefehl oder zu dem wiederhergestellten Steuerbefehl passt.

In einer beispielhaften Ausführungsform der Erfindung ist bestimmt, dass
- in einem Schritt S17 die Kommunikationsvorrichtung eine Firmware für die Kommunikationsvorrichtung empfängt oder von einem Speichermedium einliest; und
- in einem Schritt S18 die Kommunikationsvorrichtung
   - prüft, ob die empfangene Firmware unter Verwendung eines gültigen dritten Zertifikats signiert worden ist, und das Verfahren abbricht, falls das Ergebnis dieser Prüfung negativ ist, und
   - die Firmware installiert.

Hierdurch wird ein sicheres Over-the-Air-Update ermöglicht.

Die Firmware kann beispielsweise in einer an die Kommunikationsvorrichtung gesendeten E-Mail, Nachricht oder Datei enthalten sein. Das Speichermedium kann nach Bedarf auf beliebige Weise ausgebildet sein und beispielsweise einen Cloudspeicher, USB-Massenspeicher, eine CD, DVD oder BD umfassen.

Das Prüfen in Schritt S18 kann nach Bedarf auf beliebige Weise erfolgen, beispielsweise unter Verwendung wenigstens eines zusätzlichen gültigen Zertifikats.

In einer beispielhaften Ausführungsform der Erfindung ist bestimmt, dass
- die Kommunikationsvorrichtung wenigstens einen Computer umfasst; und
- wenigstens einer der Schritte S1 bis S18 mit Hilfe des Computers ausgeführt wird und/oder der erste Chiffrierschlüssel, der dritte Chiffrierschlüssel, der erste Identifikator und/oder die Konfigurationsdatei in dem Computer gespeichert ist.

In einer beispielhaften Ausführungsform der Erfindung ist bestimmt, dass
- die Kommunikationsvorrichtung wenigstens ein Sicherheitsmodul umfasst; und
- wenigstens einer der Schritte S1 bis S18 mit Hilfe des Sicherheitsmoduls ausgeführt wird und/oder das erste Zertifikat, das zweite Zertifikat, das dritte Zertifikat, der zweite Dechiffrierschlüssel und/oder der vierte Dechiffrierschlüssel in dem Sicherheitsmodul gespeichert ist.

In einer beispielhaften Ausführungsform der Erfindung ist bestimmt, dass
- die Kommunikationsvorrichtung umfasst
   - wenigstens einen Computer, und
   - wenigstens ein Sicherheitsmodul, das mit dem Computer verbunden ist;
- Daten von dem Computer zu dem Sicherheitsmodul und von dem Sicherheitsmodul zu dem Computer übertragen werden; und
- dieses Übertragen von Daten durch einen durch Software und/oder Hardware realisierten Übertragungsschutz geschützt wird, der ein Mitlesen und/oder Modifizieren der übertragenen Daten verhindert und/oder sicherstellt, dass ausschließlich der Computer dieses Übertragen von Daten steuern kann und/oder dass dieses Übertragen von Daten nur mit Hilfe eines Passworts erfolgen kann, das ausschließlich in dem Computer gespeichert ist.

In einer beispielhaften Ausführungsform der Erfindung ist bestimmt, dass
- das Sicherheitsmodul einen durch Software und/oder Hardware realisierten Schreibschutz aufweist, der ein Ändern des in dem Sicherheitsmodul gespeicherten ersten Zertifikats, des in dem Sicherheitsmodul gespeicherten zweiten Zertifikats, des in dem Sicherheitsmodul gespeicherten zweiten Dechiffrierschlüssels und/oder des in dem Sicherheitsmodul gespeicherten vierten Dechiffrierschlüssels verhindert; und/oder
- das Sicherheitsmodul einen durch Software und/oder Hardware realisierten Leseschutz aufweist, der ein Lesen des in dem Sicherheitsmodul gespeicherten zweiten Dechiffrierschlüssels und/oder des in dem Sicherheitsmodul gespeicherten vierten Dechiffrierschlüssels verhindert.

In einer beispielhaften Ausführungsform der Erfindung ist bestimmt, dass vor Schritt S1 oder S8 in einem Schritt S19 eine verschlüsselte Datenverbindung zwischen der Absendervorrichtung und der Kommunikationsvorrichtung gemäß einem Verschlüsselungsprotokoll erstellt wird.

Das Verschlüsselungsprotokoll kann nach Bedarf auf beliebige Weise ausgebildet sein, beispielsweise gemäß TLS, WPA3, IPsec oder dem Signal-Protokoll.

In einer beispielhaften Ausführungsform der Erfindung ist bestimmt, dass
- die Einrichtung eine Kommunikationsschnittstelle umfasst, die mit der Kommunikationsvorrichtung oder einer ersten Kommunikationsschnittstelle der Kommunikationsvorrichtung verbunden ist oder wird; und/oder
- die Kommunikationsvorrichtung eine erste Kommunikationsschnittstelle, die mit der Einrichtung oder einer Kommunikationsschnittstelle der Einrichtung verbunden ist oder wird, und/oder eine zweite Kommunikationsschnittstelle umfasst, die mit der Absendervorrichtung oder einer Kommunikationsschnittstelle der Absendervorrichtung verbunden ist oder wird; und/oder
- die Absendervorrichtung eine Kommunikationsschnittstelle umfasst, die mit der Kommunikationsvorrichtung oder einer zweiten Kommunikationsschnittstelle der Kommunikationsvorrichtung verbunden ist oder wird.

Jede Kommunikationsschnittstelle kann nach Bedarf auf beliebige Weise ausgebildet sein, beispielsweise als Funkschnittstelle, Infrarotschnittstelle, USB-Schnittstelle, Ethernet-Schnittstelle oder als kabelgebundene oder fiberoptische Schnittstelle.

In einer beispielhaften Ausführungsform der Erfindung ist bestimmt, dass die Absendervorrichtung den Klartext erzeugt hat oder erzeugt.

In einer beispielhaften Ausführungsform der Erfindung ist bestimmt, dass die Steueranweisung und/oder der Steuerbefehl das Senden von Betriebsdaten der Einrichtung an die oder eine Absendervorrichtung oder an die oder eine Empfängervorrichtung betrifft.

Die Betriebsdaten der Einrichtung können beispielsweise eine Untereinheit der Einrichtung betreffen, wie ein Messgerät, eine Maschine, einen Computer, eine Produktionsanlage, ein technisches System und/oder einen der eingangs genannten IIoT-Teilnehmer.

In einer beispielhaften Ausführungsform der Erfindung ist bestimmt, dass
- die Steueranweisung und/oder der Steuerbefehl das Senden von Betriebsdaten der Einrichtung an die oder eine Absendervorrichtung oder an die oder eine Empfängervorrichtung betrifft; und
- nach Schritt S7 oder S15 ein Verfahren, das wie eines der gemäß dem siebenten oder achten Aspekt vorgeschlagenen Sendeerfahren ausgebildet ist, ausgeführt wird.

Die Erfindung schlägt gemäß einem dritten Aspekt eine Kommunikationsvorrichtung, insbesondere zur Verwendung in einem Verfahren, das wie eines der gemäß dem ersten Aspekt vorgeschlagenen Steuerverfahren ausgebildet ist, oder zur zumindest teilweisen Ausführung eines solchen Verfahrens, vor, umfassend
- Mittel zum Ausführen eines solchen Verfahrens oder zum Ausführen der Schritte eines solchen Verfahrens;
   oder umfassend
- ein Mittel zum Ausführen des Schrittes S1, das mit der Absendervorrichtung verbindbar ist oder verbunden werden kann;
- ein Mittel zum Ausführen des Schrittes S2;
- ein Mittel zum Ausführen des Schrittes S3;
- ein Mittel zum Ausführen des Schrittes S4;
- ein Mittel zum Ausführen des Schrittes S5;
- ein Mittel zum Ausführen des Schrittes S6; und
- ein Mittel zum Ausführen des Schrittes S7, das mit der Einrichtung verbindbar ist oder verbunden werden kann.

Die gemäß diesem Aspekt vorgeschlagene Kommunikationsvorrichtung ermöglicht eine sichere informations- und kommunikationstechnische Vernetzung und Datenübertragung zwischen der Absendervorrichtung und der Einrichtung. Außerdem kann auf die Verwendung eines VPN für diese Datenübertragung verzichtet werden, ohne dass die Sicherheit der Datenübertragung gefährdet wird.

Im Rahmen der vorliegenden Erfindung bedeutet ein Ausdruck der Art "ein Objekt zu einer Tätigkeit" insbesondere, dass das Objekt zur Tätigkeit dient, für die Tätigkeit geeignet ist und/oder derart ausgebildet, angepasst, konzipiert oder konfiguriert ist, dass es die Tätigkeit ausübt oder ausüben kann. So bedeutet beispielsweise der Ausdruck "ein Mittel zum Ausführen des Schrittes S1" insbesondere, dass das Mittel zum Ausführen des Schrittes S1 dient, für das Ausführen des Schrittes S1 geeignet ist und/oder derart ausgebildet, angepasst, konzipiert oder konfiguriert ist, dass es Schritt S1 ausführt oder ausführen kann.

Die Erfindung schlägt gemäß einem vierten Aspekt eine Kommunikationsvorrichtung, insbesondere zur Verwendung in einem Verfahren, das wie eines der gemäß dem zweiten Aspekt vorgeschlagenen Steuerverfahren ausgebildet ist, oder zur zumindest teilweisen Ausführung eines solchen Verfahrens, vor, umfassend
- Mittel zum Ausführen eines solchen Verfahrens oder zum Ausführen der Schritte eines solchen Verfahrens;
   oder umfassend
- ein Mittel zum Ausführen des Schrittes S8, das mit der Absendervorrichtung verbindbar ist oder verbunden werden kann;
- ein Mittel zum Ausführen des Schrittes S9;
- ein Mittel zum Ausführen des Schrittes S10;
- ein Mittel zum Ausführen des Schrittes S11;
- ein Mittel zum Ausführen des Schrittes S12;
- ein Mittel zum Ausführen des Schrittes S13;
- ein Mittel zum Ausführen des Schrittes S14; und
- ein Mittel zum Ausführen des Schrittes S15, das mit der Einrichtung verbindbar ist oder verbunden werden kann.

Die gemäß diesem Aspekt vorgeschlagene Kommunikationsvorrichtung ermöglicht eine sichere informations- und kommunikationstechnische Vernetzung und Datenübertragung zwischen der Absendervorrichtung und der Einrichtung. Außerdem kann auf die Verwendung eines VPN für diese Datenübertragung verzichtet werden, ohne dass die Sicherheit der Datenübertragung gefährdet wird.

Die gemäß diesem Aspekt vorgeschlagene Kommunikationsvorrichtung kann nach Bedarf auf beliebige Weise ausgebildet sein, beispielsweise derart, dass sie zusätzlich umfasst
- ein Mittel zum Ausführen des Schrittes S1, das mit der Absendervorrichtung verbindbar ist oder verbunden werden kann; und
- ein Mittel zum Ausführen des Schrittes S3.

In einer beispielhaften Ausführungsform der Erfindung ist bestimmt, dass die Kommunikationsvorrichtung umfasst ein Mittel zum Ausführen des Schrittes S16.

In einer beispielhaften Ausführungsform der Erfindung ist bestimmt, dass die Kommunikationsvorrichtung umfasst
- ein Mittel zum Ausführen des Schrittes S17; und
- ein Mittel zum Ausführen des Schrittes S18.

Die Erfindung schlägt gemäß einem fünften Aspekt eine Kommunikationsvorrichtung, insbesondere zur Verwendung in einem Verfahren, das wie eines der gemäß dem ersten Aspekt vorgeschlagenen Steuerverfahren ausgebildet ist, oder zur zumindest teilweisen Ausführung eines solchen Verfahrens, vor, umfassend
- wenigstens einen Computer, der mit der Absendervorrichtung und der Einrichtung verbindbar ist oder verbunden werden kann; und
- wenigstens ein Sicherheitsmodul, das mit dem Computer verbunden ist;
   wobei
- der erste Chiffrierschlüssel und der erste Identifikator in dem Computer gespeichert sind;
- das erste Zertifikat in dem Sicherheitsmodul gespeichert ist;
- der Computer zum Ausführen des Schrittes S1 ausgebildet ist;
- der Computer und das Sicherheitsmodul zum Ausführen des Schrittes S2 ausgebildet sind, wobei dieses Ausführen erfolgt, indem entweder
   - das Sicherheitsmodul das erste Zertifikat zu dem Computer überträgt, und
   - der Computer prüft, ob das erste Zertifikat gültig ist und ob in diesem Zertifikat der erste Chiffrierschlüssel dem ersten Identifikator zugeordnet ist, und das Verfahren abbricht, falls das Ergebnis dieser Prüfung negativ ist,
      oder indem
   - der Computer den ersten Chiffrierschlüssel und den ersten Identifikator zu dem Sicherheitsmodul überträgt, und
   - das Sicherheitsmodul prüft, ob das erste Zertifikat gültig ist und ob in diesem Zertifikat der erste Chiffrierschlüssel dem ersten Identifikator zugeordnet ist, und der Computer das Verfahren abbricht, falls das Ergebnis dieser Prüfung negativ ist;
- der Computer zum Ausführen der Schritte S3, S4, S5, S6 und S7 ausgebildet ist.

Die gemäß diesem Aspekt vorgeschlagene Kommunikationsvorrichtung ermöglicht eine sichere informations- und kommunikationstechnische Vernetzung und Datenübertragung zwischen der Absendervorrichtung und der Einrichtung. Außerdem kann auf die Verwendung eines VPN für diese Datenübertragung verzichtet werden, ohne dass die Sicherheit der Datenübertragung gefährdet wird.

Im Rahmen der vorliegenden Erfindung bedeutet ein Ausdruck der Art "ein Objekt ist zu einer Tätigkeit ausgebildet" insbesondere, dass das Objekt zur Tätigkeit dient, für die Tätigkeit geeignet ist und/oder derart ausgebildet, angepasst, konzipiert oder konfiguriert ist, dass es die Tätigkeit ausübt oder ausüben kann. So bedeutet beispielsweise der Ausdruck "der Computer ist zum Ausführen des Schrittes S1 ausgebildet" insbesondere, dass der Computer zum Ausführen des Schrittes S1 dient, für das Ausführen des Schrittes S1 geeignet ist und/oder derart ausgebildet, angepasst, konzipiert oder konfiguriert ist, dass er Schritt S1 ausführt oder ausführen kann.

Die gemäß diesem Aspekt vorgeschlagene Kommunikationsvorrichtung kann nach Bedarf auf beliebige Art und Weise ausgebildet sein, beispielsweise wie eine der gemäß dem dritten Aspekt vorgeschlagenen Kommunikationsvorrichtungen und/oder derart, dass sie keinen zusätzlichen oder wenigstens einen zusätzlichen Computer und/oder kein zusätzliches oder wenigstens ein zusätzliches Sicherheitsmodul umfasst.

Die Erfindung schlägt gemäß einem sechsten Aspekt eine Kommunikationsvorrichtung, insbesondere zur Verwendung in einem Verfahren, das wie eines der gemäß dem zweiten Aspekt vorgeschlagenen Steuerverfahren ausgebildet ist, oder zur zumindest teilweisen Ausführung eines solchen Verfahrens, vor, umfassend
- wenigstens einen Computer, der mit der Absendervorrichtung und der Einrichtung verbindbar ist oder verbunden werden kann; und
- wenigstens ein Sicherheitsmodul, das mit dem Computer verbunden ist;
   wobei
- der erste Chiffrierschlüssel und der erste Identifikator in dem Computer gespeichert sind;
- das erste Zertifikat und der zweite Dechiffrierschlüssel in dem Sicherheitsmodul gespeichert sind;
- der Computer zum Ausführen des Schrittes S8 ausgebildet ist;
- der Computer und das Sicherheitsmodul zum Ausführen des Schrittes S9 ausgebildet sind, wobei dieses Ausführen erfolgt, indem entweder
   - das Sicherheitsmodul das erste Zertifikat zu dem Computer überträgt, und
   - der Computer prüft, ob das erste Zertifikat gültig ist und ob in diesem Zertifikat der erste Chiffrierschlüssel dem ersten Identifikator zugeordnet ist, und das Verfahren abbricht, falls das Ergebnis dieser Prüfung negativ ist,
      oder indem
   - der Computer den ersten Chiffrierschlüssel und den ersten Identifikator zu dem Sicherheitsmodul überträgt, und
   - das Sicherheitsmodul prüft, ob das erste Zertifikat gültig ist und ob in diesem Zertifikat der erste Chiffrierschlüssel dem ersten Identifikator zugeordnet ist, und der Computer das Verfahren abbricht, falls das Ergebnis dieser Prüfung negativ ist;
- der Computer und das Sicherheitsmodul zum Ausführen des Schrittes S10 ausgebildet sind, wobei dieses Ausführen erfolgt, indem
   - der Computer den Geheimtext zu dem Sicherheitsmodul überträgt,
   - das Sicherheitsmodul den Geheimtext unter Verwendung des zweiten Dechiffrierschlüssels entschlüsselt, wodurch der Klartext wiederhergestellt wird, und
   - das Sicherheitsmodul den wiederhergestellten Klartext zu dem Computer überträgt;
- der Computer zum Ausführen der Schritte S11, S12, S13, S14 und S15 ausgebildet ist.

Die gemäß diesem Aspekt vorgeschlagene Kommunikationsvorrichtung ermöglicht eine sichere informations- und kommunikationstechnische Vernetzung und Datenübertragung zwischen der Absendervorrichtung und der Einrichtung. Außerdem kann auf die Verwendung eines VPN für diese Datenübertragung verzichtet werden, ohne dass die Sicherheit der Datenübertragung gefährdet wird.

Die gemäß diesem Aspekt vorgeschlagene Kommunikationsvorrichtung kann nach Bedarf auf beliebige Art und Weise ausgebildet sein, beispielsweise wie eine der gemäß dem vierten Aspekt vorgeschlagenen Kommunikationsvorrichtungen und/oder derart, dass sie keinen zusätzlichen oder wenigstens einen zusätzlichen Computer und/oder kein zusätzliches oder wenigstens ein zusätzliches Sicherheitsmodul umfasst, und/oder derart, dass der Computer zum Ausführen der Schritte S1 und S3 ausgebildet ist.

In einer beispielhaften Ausführungsform der Erfindung ist bestimmt, dass
- die Konfigurationsdatei in dem Computer gespeichert ist;
- das zweite Zertifikat in dem Sicherheitsmodul gespeichert ist; und
- der Computer und das Sicherheitsmodul zum Ausführen des Schrittes S16 ausgebildet sind, wobei dieses Ausführen erfolgt, indem entweder
   - das Sicherheitsmodul das zweite Zertifikat zu dem Computer überträgt, und
   - der Computer prüft, ob das zweite Zertifikat gültig ist und ob die Konfigurationsdatei unter Verwendung des zweiten Zertifikats signiert worden ist, und das Verfahren abbricht, falls das Ergebnis dieser Prüfung negativ ist,
      oder indem
   - der Computer die Konfigurationsdatei zu dem Sicherheitsmodul überträgt, und
   - das Sicherheitsmodul prüft, ob das zweite Zertifikat gültig ist und ob die Konfigurationsdatei unter Verwendung des zweiten Zertifikats signiert worden ist, und der Computer das Verfahren abbricht, falls das Ergebnis dieser Prüfung negativ ist.

In einer beispielhaften Ausführungsform der Erfindung ist bestimmt, dass
- der dritte Chiffrierschlüssel in dem Computer gespeichert ist; und
- der Computer zum Ausführen des Schrittes S7 oder S15 ausgebildet ist, wobei dieses Ausführen erfolgt, indem
   - der Computer den Steuerbefehl unter Verwendung des dritten Chiffrierschlüssels verschlüsselt, und
   - der Computer den verschlüsselten Steuerbefehl an die Einrichtung sendet.

In einer beispielhaften Ausführungsform der Erfindung ist bestimmt, dass
- der zweite Dechiffrierschlüssel und/oder der vierte Dechiffrierschlüssel in dem Sicherheitsmodul gespeichert ist; und
- der Computer und das Sicherheitsmodul zum Ausführen des Schrittes S7 oder S15 ausgebildet sind, wobei dieses Ausführen erfolgt, indem
   - der Computer den Steuerbefehl zu dem Sicherheitsmodul überträgt,
   - das Sicherheitsmodul den Steuerbefehl unter Verwendung des zweiten Dechiffrierschlüssels und/oder des vierten Dechiffrierschlüssels signiert, wodurch eine Signatur erzeugt wird,
   - das Sicherheitsmodul die Signatur zu dem Computer überträgt, und
   - der Computer den Steuerbefehl und die Signatur an die Einrichtung sendet.

In einer beispielhaften Ausführungsform der Erfindung ist bestimmt, dass
- der dritte Chiffrierschlüssel in dem Computer gespeichert ist;
- der zweite Dechiffrierschlüssel und/oder der vierte Dechiffrierschlüssel in dem Sicherheitsmodul gespeichert ist; und
- der Computer und das Sicherheitsmodul zum Ausführen des Schrittes S7 oder S15 ausgebildet sind, wobei dieses Ausführen erfolgt, indem
   - der Computer den Steuerbefehl unter Verwendung des dritten Chiffrierschlüssels verschlüsselt,
   - der Computer den Steuerbefehl oder den verschlüsselten Steuerbefehl zu dem Sicherheitsmodul überträgt,
   - das Sicherheitsmodul den Steuerbefehl oder den verschlüsselten Steuerbefehl unter Verwendung des zweiten Dechiffrierschlüssels und/oder des vierten Dechiffrierschlüssels signiert, wodurch eine Signatur erzeugt wird,
   - das Sicherheitsmodul die Signatur zu dem Computer überträgt, und
   - der Computer den verschlüsselten Steuerbefehl und die Signatur an die Einrichtung sendet.

In einer beispielhaften Ausführungsform der Erfindung ist bestimmt, dass
- das dritte Zertifikat in dem Sicherheitsmodul gespeichert ist;
- der Computer zum Ausführen des Schrittes S17 ausgebildet ist; und
- der Computer und das Sicherheitsmodul zum Ausführen des Schrittes S18 ausgebildet sind, wobei dieses Ausführen erfolgt, indem entweder
   - das Sicherheitsmodul das dritte Zertifikat zu dem Computer überträgt,
   - der Computer prüft, ob das dritte Zertifikat gültig ist und ob die Firmware unter Verwendung des dritten Zertifikats signiert worden ist, und das Verfahren abbricht, falls das Ergebnis dieser Prüfung negativ ist, und
   - der Computer die Firmware installiert,
      oder indem
   - der Computer die Firmware zu dem Sicherheitsmodul überträgt,
   - das Sicherheitsmodul prüft, ob das dritte Zertifikat gültig ist und ob die Firmware unter Verwendung des dritten Zertifikats signiert worden ist, und der Computer das Verfahren abbricht, falls das Ergebnis dieser Prüfung negativ ist, und
   - der Computer die Firmware installiert.

Hierdurch wird ein sicheres Over-the-Air-Update ermöglicht.

In einer beispielhaften Ausführungsform der Erfindung ist bestimmt, dass ein Übertragen von Daten von dem Computer zu dem Sicherheitsmodul und von dem Sicherheitsmodul zu dem Computer durch einen durch Software und/oder Hardware realisierten Übertragungsschutz geschützt wird, der ein Mitlesen und/oder Modifizieren der übertragenen Daten verhindert und/oder sicherstellt, dass ausschließlich der Computer dieses Übertragen von Daten steuern kann und/oder dass dieses Übertragen von Daten nur mit Hilfe eines Passworts erfolgen kann, das ausschließlich in dem Computer gespeichert ist.

In einer beispielhaften Ausführungsform der Erfindung ist bestimmt, dass
- das Sicherheitsmodul einen durch Software und/oder Hardware realisierten Schreibschutz aufweist, der ein Ändern des in dem Sicherheitsmodul gespeicherten ersten Zertifikats, des in dem Sicherheitsmodul gespeicherten zweiten Zertifikats, des in dem Sicherheitsmodul gespeicherten zweiten Dechiffrierschlüssels und/oder des in dem Sicherheitsmodul gespeicherten vierten Dechiffrierschlüssels verhindert; und/oder
- das Sicherheitsmodul einen durch Software und/oder Hardware realisierten Leseschutz aufweist, der ein Lesen des in dem Sicherheitsmodul gespeicherten zweiten Dechiffrierschlüssels und/oder des in dem Sicherheitsmodul gespeicherten vierten Dechiffrierschlüssels verhindert.

In einer beispielhaften Ausführungsform der Erfindung ist bestimmt, dass der Computer zum Ausführen des Schrittes S19 ausgebildet ist.

In einer beispielhaften Ausführungsform der Erfindung ist bestimmt, dass die Kommunikationsvorrichtung umfasst
- eine erste Kommunikationsschnittstelle, die mit der Einrichtung oder einer Kommunikationsschnittstelle der Einrichtung verbindbar ist oder verbunden werden kann; und/oder
- eine zweite Kommunikationsschnittstelle, die mit der Absendervorrichtung oder einer Kommunikationsschnittstelle der Absendervorrichtung verbindbar ist oder verbunden werden kann.

Die Erfindung schlägt gemäß einem siebenten Aspekt ein Verfahren zum Senden von Betriebsdaten einer Einrichtung an eine Empfängervorrichtung vor, wobei
- eine Kommunikationsvorrichtung mit der Einrichtung verbunden ist oder wird;
- in einem Schritt B1 die Kommunikationsvorrichtung die Betriebsdaten von der Einrichtung empfängt;
- in einem Schritt B2 die Kommunikationsvorrichtung einen zweiten Identifikator, der der Empfängervorrichtung zugeordnet ist, und einen fünften Chiffrierschlüssel unter Verwendung eines gültigen vierten Zertifikats verifiziert und das Verfahren abbricht, falls das Ergebnis dieser Verifikation negativ ist;
- in einem Schritt B3 die Kommunikationsvorrichtung prüft, ob eine Berechtigung für den Empfang der Betriebsdaten dem fünften Chiffrierschlüssel und/oder dem zweiten Identifikator zugeordnet ist, und das Verfahren abbricht, falls das Ergebnis dieser Prüfung negativ ist; und
- in einem Schritt B4 die Kommunikationsvorrichtung
   - die Betriebsdaten unter Verwendung eines sechsten Dechiffrierschlüssels, der der Kommunikationsvorrichtung zugeordnet ist, signiert, wodurch eine Signatur erzeugt wird, und
   - die Betriebsdaten und die Signatur an die Empfängervorrichtung sendet.

Das gemäß diesem Aspekt vorgeschlagene Verfahren, das im Rahmen der vorliegenden Erfindung auch als Sendeverfahren bezeichnet wird, ermöglicht eine sichere informations- und kommunikationstechnische Vernetzung und Datenübertragung zwischen der Einrichtung und der Empfängervorrichtung. Außerdem kann auf die Verwendung eines VPN für diese Datenübertragung verzichtet werden, ohne dass die Sicherheit der Datenübertragung gefährdet wird.

Die Empfängervorrichtung kann nach Bedarf auf beliebige Weise ausgebildet sein und beispielsweise wenigstens ein Messgerät, wenigstens eine Maschine, wenigstens einen Computer, wenigstens eine Produktionsanlage, wenigstens ein technisches System und/oder wenigstens einen der eingangs genannten IIoT-Teilnehmer umfassen und/oder die Absendervorrichtung bilden.

Das Senden in Schritt B4 kann nach Bedarf auf beliebige Weise erfolgen, beispielsweise indem die Kommunikationsvorrichtung eine Datei, die die Betriebsdaten enthält, sowie eine Signaturdatei, die die Signatur enthält, oder lediglich eine Signaturdatei, die die Signatur und als Metadaten die Betriebsdaten enthält, an die Empfängervorrichtung sendet. Diese Übertragung erfolgt beispielhaft über ein VPN.

Die Erfindung schlägt gemäß einem achten Aspekt ein Verfahren zum Senden von Betriebsdaten einer Einrichtung an eine Empfängervorrichtung vor, wobei
- eine Kommunikationsvorrichtung mit der Einrichtung verbunden ist oder wird;
- in einem Schritt B5 die Kommunikationsvorrichtung die Betriebsdaten von der Einrichtung empfängt;
- in einem Schritt B6 die Kommunikationsvorrichtung einen zweiten Identifikator, der der Empfängervorrichtung zugeordnet ist, und einen fünften Chiffrierschlüssel unter Verwendung eines gültigen vierten Zertifikats verifiziert und das Verfahren abbricht, falls das Ergebnis dieser Verifikation negativ ist;
- in einem Schritt B7 die Kommunikationsvorrichtung prüft, ob eine Berechtigung für den Empfang der Betriebsdaten dem fünften Chiffrierschlüssel und/oder dem zweiten Identifikator zugeordnet ist, und das Verfahren abbricht, falls das Ergebnis dieser Prüfung negativ ist; und
- in einem Schritt B8 die Kommunikationsvorrichtung
   - die Betriebsdaten unter Verwendung des fünften Chiffrierschlüssels verschlüsselt;
   - die Betriebsdaten oder die verschlüsselten Betriebsdaten unter Verwendung eines sechsten Dechiffrierschlüssels, der der Kommunikationsvorrichtung zugeordnet ist, signiert, wodurch eine Signatur erzeugt wird; und
   - die verschlüsselten Betriebsdaten und die Signatur an die Empfängervorrichtung sendet.

Das gemäß diesem Aspekt vorgeschlagene Verfahren, das im Rahmen der vorliegenden Erfindung auch als Sendeverfahren bezeichnet wird, ermöglicht eine sichere informations- und kommunikationstechnische Vernetzung und Datenübertragung zwischen der Einrichtung und der Empfängervorrichtung. Außerdem kann auf die Verwendung eines VPN für diese Datenübertragung verzichtet werden, ohne dass die Sicherheit der Datenübertragung gefährdet wird.

Das Senden in Schritt B8 kann nach Bedarf auf beliebige Weise erfolgen, beispielsweise indem die Kommunikationsvorrichtung eine Datei, die die verschlüsselten Betriebsdaten enthält, sowie eine Signaturdatei, die die Signatur enthält, oder lediglich eine Signaturdatei, die die Signatur und als Metadaten die verschlüsselten Betriebsdaten enthält, an die Empfängervorrichtung sendet. Diese Übertragung erfolgt beispielhaft über ein VPN.

Das Verifizieren in Schritt B2 und B6 kann nach Bedarf auf beliebige Weise erfolgen, beispielsweise derart, dass unter Verwendung des vierten Zertifikats geprüft wird, ob der fünfte Chiffrierschlüssel zu dem zweiten Identifikator passt, und/oder unter Verwendung wenigstens eines zusätzlichen gültigen Zertifikats.

Der sechste Dechiffrierschlüssel kann nach Bedarf auf beliebige Weise ausgebildet sein, beispielsweise unterschiedlich zu dem zweiten und/oder dem vierten Dechiffrierschlüssel oder gleich dem zweiten und/oder dem vierten Dechiffrierschlüssel.

In einer beispielhaften Ausführungsform der Erfindung ist bestimmt, dass die Einrichtung
- die Betriebsdaten unter Verwendung eines sechsten Chiffrierschlüssels, der mit dem sechsten Dechiffrierschlüssel korrespondiert, oder eines siebenten Chiffrierschlüssels, der der Kommunikationsvorrichtung zugeordnet ist, verschlüsselt, und
- die verschlüsselten Betriebsdaten an die Kommunikationsvorrichtung sendet.

Der siebente Chiffrierschlüssel kann nach Bedarf auf beliebige Weise ausgebildet sein, beispielsweise unterschiedlich zu dem zweiten und/oder dem vierten und/oder dem sechsten Chiffrierschlüssel oder gleich dem zweiten und/oder dem vierten und/oder dem sechsten Chiffrierschlüssel.

In einer beispielhaften Ausführungsform der Erfindung ist bestimmt, dass in einem Schritt B9 die Kommunikationsvorrichtung die empfangenen verschlüsselten Betriebsdaten unter Verwendung des sechsten Dechiffrierschlüssels oder eines siebenten Dechiffrierschlüssels, der mit dem siebenten Chiffrierschlüssel korrespondiert, entschlüsselt, wodurch die Betriebsdaten wiederhergestellt werden.

Der siebente Dechiffrierschlüssel kann nach Bedarf auf beliebige Weise ausgebildet sein, beispielsweise unterschiedlich zu dem zweiten und/oder dem vierten und/oder dem sechsten Dechiffrierschlüssel oder gleich dem zweiten und/oder dem vierten und/oder dem sechsten Dechiffrierschlüssel.

In einer beispielhaften Ausführungsform der Erfindung ist bestimmt, dass die Einrichtung
- die Betriebsdaten unter Verwendung eines achten Dechiffrierschlüssels, der der Einrichtung zugeordnet ist, signiert, wodurch eine Signatur erzeugt wird, und
- die Betriebsdaten und die Signatur an die Kommunikationsvorrichtung sendet.

In einer beispielhaften Ausführungsform der Erfindung ist bestimmt, dass in einem Schritt B10 die Kommunikationsvorrichtung die empfangenen Betriebsdaten und die empfangene Signatur unter Verwendung eines achten Chiffrierschlüssels, der mit dem achten Dechiffrierschlüssel korrespondiert, verifiziert und das Verfahren abbricht, falls das Ergebnis dieser Verifikation negativ ist.

Das Verifizieren in Schritt B10 kann nach Bedarf auf beliebige Weise erfolgen, beispielsweise derart, dass unter Verwendung des achten Chiffrierschlüssels geprüft wird, ob die empfangene Signatur zu den empfangenen Betriebsdaten passt.

In einer beispielhaften Ausführungsform der Erfindung ist bestimmt, dass die Einrichtung
- die Betriebsdaten unter Verwendung eines sechsten Chiffrierschlüssels, der mit dem sechsten Dechiffrierschlüssel korrespondiert, oder eines siebenten Chiffrierschlüssels, der der Kommunikationsvorrichtung zugeordnet ist, verschlüsselt,
- die Betriebsdaten oder die verschlüsselten Betriebsdaten unter Verwendung eines achten Dechiffrierschlüssels, der der Einrichtung zugeordnet ist, signiert, wodurch eine Signatur erzeugt wird, und
- die verschlüsselten Betriebsdaten und die Signatur an die Kommunikationsvorrichtung sendet.

In einer beispielhaften Ausführungsform der Erfindung ist bestimmt, dass in einem Schritt B11 die Kommunikationsvorrichtung
- die empfangenen verschlüsselten Betriebsdaten unter Verwendung des sechsten Dechiffrierschlüssels oder eines siebenten Dechiffrierschlüssels, der mit dem siebenten Chiffrierschlüssel korrespondiert, entschlüsselt, wodurch die Betriebsdaten wiederhergestellt werden, und
- die empfangenen verschlüsselten Betriebsdaten und die empfangene Signatur oder die wiederhergestellten Betriebsdaten und die empfangene Signatur unter Verwendung eines achten Chiffrierschlüssels, der mit dem achten Dechiffrierschlüssel korrespondiert, verifiziert und das Verfahren abbricht, falls das Ergebnis dieser Verifikation negativ ist.

Das Verifizieren in Schritt B11 kann nach Bedarf auf beliebige Weise erfolgen, beispielsweise derart, dass unter Verwendung des ersten Chiffrierschlüssels geprüft wird, ob die empfangene Signatur zu den empfangenen verschlüsselten Betriebsdaten oder zu den wiederhergestellten Betriebsdaten passt.

In einer beispielhaften Ausführungsform der Erfindung ist bestimmt, dass vor dem Senden gemäß Schritt B4 oder B8 in einem Schritt B12 eine verschlüsselte Datenverbindung zwischen der Kommunikationsvorrichtung und der Empfängervorrichtung gemäß einem Verschlüsselungsprotokoll erstellt wird.

In einer beispielhaften Ausführungsform der Erfindung ist bestimmt, dass
- vor Schritt B1 oder B5 ein Verfahren, das wie eines der gemäß dem ersten oder zweiten Aspekt vorgeschlagenen Steuerverfahren ausgebildet ist, ausgeführt wird; und
- die Steueranweisung und/oder der Steuerbefehl das Senden von Betriebsdaten der Einrichtung an die oder eine Empfängervorrichtung oder an die oder eine Absendervorrichtung betrifft.

In einer beispielhaften Ausführungsform der Erfindung ist bestimmt, dass
- wenigstens einer der Chiffrierschlüssel ein öffentlicher Schlüssel eines Schlüsselpaars eines asymmetrischen Kryptosystems und der jeweilige Dechiffrierschlüssel ein privater Schlüssel dieses Schlüsselpaars ist; oder
- wenigstens einer der Chiffrierschlüssel und der jeweilige Dechiffrierschlüssel gleich sind.

Die Erfindung schlägt gemäß einem neunten Aspekt eine Kommunikationsvorrichtung, insbesondere zur Verwendung in einem Verfahren, das wie eines der gemäß dem siebenten Aspekt vorgeschlagenen Sendeverfahren ausgebildet ist, oder zur zumindest teilweisen Ausführung eines solchen Verfahrens, vor, umfassend
- Mittel zum Ausführen eines solchen Verfahrens oder zum Ausführen der Schritte eines solchen Verfahrens;
   oder umfassend
- ein Mittel zum Ausführen des Schrittes B1, das mit der Einrichtung verbindbar ist oder verbunden werden kann;
- ein Mittel zum Ausführen des Schrittes B2;
- ein Mittel zum Ausführen des Schrittes B3; und
- ein Mittel zum Ausführen des Schrittes B4, das mit der Empfängervorrichtung verbunden werden.

Die gemäß diesem Aspekt vorgeschlagene Kommunikationsvorrichtung ermöglicht eine sichere informations- und kommunikationstechnische Vernetzung und Datenübertragung zwischen der Einrichtung und der Empfängervorrichtung. Außerdem kann auf die Verwendung eines VPN für diese Datenübertragung verzichtet werden, ohne dass die Sicherheit der Datenübertragung gefährdet wird.

Die Erfindung schlägt gemäß einem zehnten Aspekt eine Kommunikationsvorrichtung, insbesondere zur Verwendung in einem Verfahren, das wie eines der gemäß dem achten Aspekt vorgeschlagenen Sendeverfahren ausgebildet ist, oder zur zumindest teilweisen Ausführung eines solchen Verfahrens, vor, umfassend
- Mittel zum Ausführen eines solchen Verfahrens oder zum Ausführen der Schritte eines solchen Verfahrens;
   oder umfassend
- ein Mittel zum Ausführen des Schrittes B5, das mit der Einrichtung verbindbar ist oder verbunden werden kann;
- ein Mittel zum Ausführen des Schrittes B6;
- ein Mittel zum Ausführen des Schrittes B7; und
- ein Mittel zum Ausführen des Schrittes B8, das mit der Empfängervorrichtung verbindbar ist oder verbunden werden kann.

Die gemäß diesem Aspekt vorgeschlagene Kommunikationsvorrichtung ermöglicht eine sichere informations- und kommunikationstechnische Vernetzung und Datenübertragung zwischen der Einrichtung und der Empfängervorrichtung. Außerdem kann auf die Verwendung eines VPN für diese Datenübertragung verzichtet werden, ohne dass die Sicherheit der Datenübertragung gefährdet wird.

Die gemäß diesem Aspekt vorgeschlagene Kommunikationsvorrichtung kann nach Bedarf auf beliebige Weise ausgebildet sein, beispielsweise derart, dass sie zusätzlich ein Mittel zum Ausführen des Schrittes B4 umfasst, das mit der Empfängervorrichtung verbindbar ist oder verbunden werden kann.

Die Erfindung schlägt gemäß einem elften Aspekt eine Kommunikationsvorrichtung, insbesondere zur Verwendung in einem Verfahren, das wie eines der gemäß dem siebenten Aspekt vorgeschlagenen Sendeverfahren ausgebildet ist, oder zur zumindest teilweisen Ausführung eines solchen Verfahrens, vor, umfassend
- wenigstens einen Computer, der mit der Einrichtung und der Empfängervorrichtung verbindbar ist oder verbunden werden kann; und
- wenigstens ein Sicherheitsmodul, das mit dem Computer verbunden ist;
   wobei
- der fünfte Chiffrierschlüssel und der zweite Identifikator in dem Computer gespeichert sind;
- das vierte Zertifikat in dem Sicherheitsmodul gespeichert ist;
- der zweite, der vierte, der sechste und/oder der siebente Dechiffrierschlüssel in dem Sicherheitsmodul gespeichert ist;
- der Computer zum Ausführen des Schrittes B1 ausgebildet ist;
- der Computer und das Sicherheitsmodul zum Ausführen des Schrittes B2 ausgebildet sind, wobei dieses Ausführen erfolgt, indem entweder
   - das Sicherheitsmodul das vierte Zertifikat zu dem Computer überträgt, und
   - der Computer prüft, ob das vierte Zertifikat gültig ist und ob in diesem Zertifikat der fünfte Chiffrierschlüssel dem zweiten Identifikator zugeordnet ist, und das Verfahren abbricht, falls das Ergebnis dieser Prüfung negativ ist,
      oder indem
   - der Computer den fünften Chiffrierschlüssel und den zweiten Identifikator zu dem Sicherheitsmodul überträgt, und
   - das Sicherheitsmodul prüft, ob das vierte Zertifikat gültig ist und ob in diesem Zertifikat der fünfte Chiffrierschlüssel dem zweiten Identifikator zugeordnet ist, und der Computer das Verfahren abbricht, falls das Ergebnis dieser Prüfung negativ ist;
- der Computer zum Ausführen des Schrittes B3 ausgebildet ist; und
- der Computer und das Sicherheitsmodul zum Ausführen des Schrittes B4 ausgebildet ist, wobei dieses Ausführen erfolgt, indem
   - der Computer die Betriebsdaten zu dem Sicherheitsmodul überträgt,
   - das Sicherheitsmodul die Betriebsdaten unter Verwendung des zweiten, des vierten, des sechsten und/oder des siebenten Dechiffrierschlüssels signiert, wodurch eine Signatur erzeugt wird,
   - das Sicherheitsmodul die Signatur zu dem Computer überträgt, und
   - der Computer die Betriebsdaten und die Signatur an die Empfängervorrichtung sendet.

Die gemäß diesem Aspekt vorgeschlagene Kommunikationsvorrichtung ermöglicht eine sichere informations- und kommunikationstechnische Vernetzung und Datenübertragung zwischen der Einrichtung und der Empfängervorrichtung. Außerdem kann auf die Verwendung eines VPN für diese Datenübertragung verzichtet werden, ohne dass die Sicherheit der Datenübertragung gefährdet wird.

Die Erfindung schlägt gemäß einem zwölften Aspekt eine Kommunikationsvorrichtung, insbesondere zur Verwendung in einem Verfahren, das wie eines der gemäß dem zweiten Aspekt vorgeschlagenen Sendeverfahren ausgebildet ist, oder zur zumindest teilweisen Ausführung eines solchen Verfahrens, vor, umfassend
- wenigstens einen Computer, der mit der Einrichtung und der Empfängervorrichtung verbindbar ist oder verbunden werden kann; und
- wenigstens ein Sicherheitsmodul, das mit dem Computer verbunden ist;
   wobei
- der fünfte Chiffrierschlüssel und der zweite Identifikator in dem Computer gespeichert sind;
- das vierte Zertifikat in dem Sicherheitsmodul gespeichert ist;
- der zweite, der vierte, der sechste und/oder der siebente Dechiffrierschlüssel in dem Sicherheitsmodul gespeichert ist;
- der Computer zum Ausführen des Schrittes B5 ausgebildet ist;
- der Computer und das Sicherheitsmodul zum Ausführen des Schrittes B6 ausgebildet sind, wobei dieses Ausführen erfolgt, indem entweder
   - das Sicherheitsmodul das vierte Zertifikat zu dem Computer überträgt, und
   - der Computer prüft, ob das vierte Zertifikat gültig ist und ob in diesem Zertifikat der fünfte Chiffrierschlüssel dem zweiten Identifikator zugeordnet ist, und das Verfahren abbricht, falls das Ergebnis dieser Prüfung negativ ist,
      oder indem
   - der Computer den fünften Chiffrierschlüssel und den zweiten Identifikator zu dem Sicherheitsmodul überträgt, und
   - das Sicherheitsmodul prüft, ob das vierte Zertifikat gültig ist und ob in diesem Zertifikat der fünfte Chiffrierschlüssel dem zweiten Identifikator zugeordnet ist, und der Computer das Verfahren abbricht, falls das Ergebnis dieser Prüfung negativ ist;
- der Computer zum Ausführen der Schrittes B7 ausgebildet ist; und
- der Computer und das Sicherheitsmodul zum Ausführen des Schrittes B8 ausgebildet sind, wobei dieses Ausführen erfolgt, indem
   - der Computer die Betriebsdaten unter Verwendung des fünften Chiffrierschlüssels verschlüsselt,
   - der Computer die Betriebsdaten oder die verschlüsselten Betriebsdaten zu dem Sicherheitsmodul überträgt,
   - das Sicherheitsmodul die Betriebsdaten oder die verschlüsselten Betriebsdaten unter Verwendung des zweiten, des vierten, des sechsten und/oder des siebenten Dechiffrierschlüssels signiert, wodurch eine Signatur erzeugt wird,
   - das Sicherheitsmodul die Signatur zu dem Computer überträgt, und
   - der Computer die verschlüsselten Betriebsdaten und die Signatur an die Empfängervorrichtung sendet.

Die gemäß diesem Aspekt vorgeschlagene Kommunikationsvorrichtung ermöglicht eine sichere informations- und kommunikationstechnische Vernetzung und Datenübertragung zwischen der Einrichtung und der Empfängervorrichtung. Außerdem kann auf die Verwendung eines VPN für diese Datenübertragung verzichtet werden, ohne dass die Sicherheit der Datenübertragung gefährdet wird.

Die Erfindung schlägt gemäß einem dreizehnten Aspekt ein Computerprogramm vor, das Befehle umfasst, die bei der Ausführung durch einen Computer oder eine

Kommunikationsvorrichtung, die wie eine der gemäß dem dritten, vierten, fünften, sechsten, neunten, zehnten, elften oder zwölften Aspekt vorgeschlagenen Kommunikationsvorrichtungen ausgebildet ist, bewirken, dass dieser Computer beziehungsweise diese Kommunikationsvorrichtung ein Verfahren, das wie eines der gemäß dem ersten Aspekt vorgeschlagenen Steuerverfahren ausgebildet ist, ein Verfahren, das wie eines der gemäß dem zweiten Aspekt vorgeschlagenen Steuerverfahren ausgebildet ist, ein Verfahren, das wie eines der gemäß dem siebenten Aspekt vorgeschlagenen Sendeverfahren ausgebildet ist, und/oder ein Verfahren, das wie eines der gemäß dem achten Aspekt vorgeschlagenen Sendeverfahren ausgebildet ist, ausführt.

Die Erfindung schlägt gemäß einem vierzehnten Aspekt ein computerlesbares Medium vor,
- auf dem ein Computerprogramm, das wie eines der gemäß dem dreizehnten Aspekt vorgeschlagenen Computerprogramme ausgebildet ist, gespeichert ist; und/oder
- umfassend Befehle, die bei der Ausführung durch einen Computer oder eine Kommunikationsvorrichtung, die wie eine der gemäß dem dritten, vierten, fünften, sechsten, neunten, zehnten, elften oder zwölften Aspekt vorgeschlagenen Kommunikationsvorrichtungen ausgebildet ist, bewirken, dass dieser Computer beziehungsweise diese Kommunikationsvorrichtung ein Verfahren, das wie eines der gemäß dem ersten Aspekt vorgeschlagenen Steuerverfahren ausgebildet ist, ein Verfahren, das wie eines der gemäß dem zweiten Aspekt vorgeschlagenen Steuerverfahren ausgebildet ist, ein Verfahren, das wie eines der gemäß dem siebenten Aspekt vorgeschlagenen Sendeverfahren ausgebildet ist, und/oder ein Verfahren, das wie eines der gemäß dem achten Aspekt vorgeschlagenen Sendeverfahren ausgebildet ist, ausführt.

Das computerlesbare Medium kann nach Bedarf beispielsweise derart ausgebildet sein, dass es wenigstens ein computerlesbares Speichermedium und/oder wenigstens einen computerlesbaren Datenträger umfasst.

Die Erfindung schlägt gemäß einem fünfzehnten Aspekt ein Datenträgersignal vor, das das Computerprogramm, das wie eines der gemäß dem dreizehnten Aspekt vorgeschlagenen Computerprogramme ausgebildet ist, überträgt.

Die Erfindung schlägt gemäß einem sechzehnten Aspekt ein Verfahren zum Einrichten einer Kommunikationsvorrichtung vor, wobei
- in einem Schritt E1 ein Inhaber der Einrichtung durch Anwendung eines asymmetrischen Kryptosystems ein Schlüsselpaar mit einem öffentlichen Schlüssel und einem privaten Schlüssel erzeugt, wobei der öffentliche Schlüssel den dritten Chiffrierschlüssel und der private Schlüssel den dritten Dechiffrierschlüssel bildet;
- in einem Schritt E2 der Inhaber das erste Zertifikat für den ersten Chiffrierschlüssel ausstellt und an die Kommunikationsvorrichtung sendet;
- in einem Schritt E3 das erste Zertifikat in einem ersten Speicherbereich der Kommunikationsvorrichtung, insbesondere des Sicherheitsmoduls, gespeichert wird;
- in einem Schritt E4 ein Schreibschutz für den ersten Speicherbereich aktiviert wird;
- in einem Schritt E5 die Kommunikationsvorrichtung, insbesondere das Sicherheitsmodul, durch Anwendung eines asymmetrischen Kryptosystems ein Schlüsselpaar mit einem öffentlichen Schlüssel und einem privaten Schlüssel erzeugt, wobei der öffentliche Schlüssel den zweiten Chiffrierschlüssel und der private Schlüssel den zweiten Dechiffrierschlüssel bildet;
- in einem Schritt E6 der zweite Dechiffrierschlüssel in einem zweiten Speicherbereich der Kommunikationsvorrichtung, insbesondere des Sicherheitsmoduls, gespeichert wird;
- in einem Schritt E7 ein Schreibschutz und ein Leseschutz für den zweiten Speicherbereich aktiviert werden;
- in einem Schritt E8 die Kommunikationsvorrichtung, insbesondere das Sicherheitsmodul, eine Zertifikatsignierungsanforderung für den zweiten Chiffrierschlüssel unter Verwendung des zweiten Dechiffrierschlüssels erzeugt;
- in einem Schritt E9 die Kommunikationsvorrichtung, insbesondere der Computer, die Zertifikatsignierungsanforderung an den Inhaber sendet;
- in einem Schritt E10 der Inhaber die Zertifikatsignierungsanforderung unter Verwendung des dritten Dechiffrierschlüssels signiert, wodurch ein fünftes Zertifikat für den zweiten Chiffrierschlüssel ausgestellt wird, und das fünfte Zertifikat an die Kommunikationsvorrichtung sendet;
- in einem Schritt E11 entweder
   - das fünfte Zertifikat in einem dritten Speicherbereich der Kommunikationsvorrichtung, insbesondere des Sicherheitsmoduls, gespeichert wird, und
   - die Kommunikationsvorrichtung, insbesondere das Sicherheitsmodul, das fünfte Zertifikat unter Verwendung des ersten Zertifikats verifiziert und das Verfahren abbricht, falls das Ergebnis dieser Verifikation negativ ist,
      oder
   - die Kommunikationsvorrichtung, insbesondere der Computer, das fünfte Zertifikat unter Verwendung des ersten Zertifikats verifiziert und das Verfahren abbricht, falls das Ergebnis dieser Verifikation negativ ist, und
   - das fünfte Zertifikat in einem dritten Speicherbereich der Kommunikationsvorrichtung, insbesondere des Sicherheitsmoduls, gespeichert wird;
- in einem Schritt E12 ein Schreibschutz für den dritten Speicherbereich aktiviert wird.

Das gemäß diesem Aspekt vorgeschlagene Verfahren, das im Rahmen der vorliegenden Erfindung auch als Einrichtverfahren bezeichnet wird, ermöglicht eine einfache, sichere und vertrauenswürdige Einrichtung der Kommunikationsvorrichtung durch den Inhaber, ohne dass eine andere Partei beteiligt sein muss.

Die Kommunikationsvorrichtung kann nach Bedarf auf beliebige Art und Weise ausgebildet sein, beispielsweise wie eine der gemäß dem dritten, vierten, fünften oder sechsten Aspekt vorgeschlagenen Kommunikationsvorrichtungen.

Das Verifizieren in Schritt E11 kann nach Bedarf auf beliebige Weise erfolgen, beispielsweise unter Verwendung wenigstens eines zusätzlichen gültigen Zertifikats.

Die Erfindung schlägt gemäß einem siebzehnten Aspekt ein Verfahren zum Einrichten einer Kommunikationsvorrichtung vor, wobei
- in einem Schritt E13 ein Inhaber der Einrichtung durch Anwendung eines asymmetrischen Kryptosystems ein Schlüsselpaar mit einem öffentlichen Schlüssel und einem privaten Schlüssel erzeugt, wobei der öffentliche Schlüssel den dritten Chiffrierschlüssel und der private Schlüssel den dritten Dechiffrierschlüssel bildet;
- in einem Schritt E14 der Inhaber das erste Zertifikat für den ersten Chiffrierschlüssel ausstellt und an die Kommunikationsvorrichtung sendet;
- in einem Schritt E15 ein Hersteller der Einrichtung durch Anwendung eines asymmetrischen Kryptosystems ein Schlüsselpaar mit einem öffentlichen Schlüssel und einem privaten Schlüssel erzeugt, wobei der öffentliche Schlüssel einen neunten Chiffrierschlüssel und der private Schlüssel einen neunten Dechiffrierschlüssel bildet;
- in einem Schritt E16 der Hersteller ein sechstes Zertifikat für den ersten Chiffrierschlüssel ausstellt und an die Kommunikationsvorrichtung sendet;
- in einem Schritt E17 das erste Zertifikat und das sechste Zertifikat in einem ersten Speicherbereich der Kommunikationsvorrichtung, insbesondere des Sicherheitsmoduls, gespeichert werden;
- in einem Schritt E18 ein Schreibschutz für den ersten Speicherbereich aktiviert wird;
- in einem Schritt E19 die Kommunikationsvorrichtung, insbesondere das Sicherheitsmodul, durch Anwendung eines asymmetrischen Kryptosystems ein Schlüsselpaar mit einem öffentlichen Schlüssel und einem privaten Schlüssel erzeugt, wobei der öffentliche Schlüssel den zweiten Chiffrierschlüssel und der private Schlüssel den zweiten Dechiffrierschlüssel bildet;
- in einem Schritt E20 der zweite Dechiffrierschlüssel in einem zweiten Speicherbereich der Kommunikationsvorrichtung, insbesondere des Sicherheitsmoduls, gespeichert wird;
- in einem Schritt E21 ein Schreibschutz und ein Leseschutz für den zweiten Speicherbereich aktiviert werden;
- in einem Schritt E22 die Kommunikationsvorrichtung, insbesondere das Sicherheitsmodul, eine Zertifikatsignierungsanforderung für den zweiten Chiffrierschlüssel unter Verwendung des zweiten Dechiffrierschlüssels erzeugt;
- in einem Schritt E23 die Kommunikationsvorrichtung, insbesondere der Computer, die Zertifikatsignierungsanforderung an den Inhaber sendet;
- in einem Schritt E24 der Inhaber die Zertifikatsignierungsanforderung unter Verwendung des dritten Dechiffrierschlüssels signiert, wodurch ein fünftes Zertifikat für den zweiten Chiffrierschlüssel ausgestellt wird, und das fünfte Zertifikat an die Kommunikationsvorrichtung sendet;
- in einem Schritt E25 die Kommunikationsvorrichtung, insbesondere der Computer, die Zertifikatsignierungsanforderung an den Hersteller sendet;
- in einem Schritt E26 der Hersteller die Zertifikatsignierungsanforderung unter Verwendung des neunten Dechiffrierschlüssels signiert, wodurch ein siebentes Zertifikat für den zweiten Chiffrierschlüssel ausgestellt wird, und das siebente Zertifikat an die Kommunikationsvorrichtung sendet;
- in einem Schritt E27 entweder
   - das fünfte Zertifikat und das siebente Zertifikat in einem dritten Speicherbereich der Kommunikationsvorrichtung, insbesondere des Sicherheitsmoduls, gespeichert werden, und
   - die Kommunikationsvorrichtung, insbesondere das Sicherheitsmodul,
      - das fünfte Zertifikat unter Verwendung des ersten Zertifikats verifiziert und das Verfahren abbricht, falls das Ergebnis dieser Verifikation negativ ist, und
      - das siebente Zertifikat unter Verwendung des sechsten Zertifikats verifiziert und das Verfahren abbricht, falls das Ergebnis dieser Verifikation negativ ist,
      oder
   - die Kommunikationsvorrichtung, insbesondere der Computer,
      - das fünfte Zertifikat unter Verwendung des ersten Zertifikats verifiziert und das Verfahren abbricht, falls das Ergebnis dieser Verifikation negativ ist,
      - das siebente Zertifikat unter Verwendung des sechsten Zertifikats verifiziert und das Verfahren abbricht, falls das Ergebnis dieser Verifikation negativ ist, und
      - das fünfte Zertifikat und das siebente Zertifikat in einem dritten Speicherbereich der Kommunikationsvorrichtung, insbesondere des Sicherheitsmoduls, gespeichert werden;
- in einem Schritt E28 ein Schreibschutz für den dritten Speicherbereich aktiviert wird.

Das gemäß diesem Aspekt vorgeschlagene Verfahren, das im Rahmen der vorliegenden Erfindung auch als Einrichtverfahren bezeichnet wird, ermöglicht eine einfache, sichere und vertrauenswürdige Einrichtung der Kommunikationsvorrichtung durch den Inhaber und den Hersteller, ohne dass eine andere Partei beteiligt sein muss.

Die Kommunikationsvorrichtung kann nach Bedarf auf beliebige Art und Weise ausgebildet sein, beispielsweise wie eine der gemäß dem dritten, vierten, fünften oder sechsten Aspekt vorgeschlagenen Kommunikationsvorrichtungen.

Jedes Verifizieren in Schritt E27 kann nach Bedarf auf beliebige Weise erfolgen, beispielsweise unter Verwendung wenigstens eines zusätzlichen gültigen Zertifikats.

In einer beispielhaften Ausführungsform der Erfindung ist bestimmt, dass
- in einem Schritt E29 der Inhaber prüft, ob das erste Zertifikat, das in dem ersten Speicherbereich gespeichert ist, unverändert ist, und das Verfahren abbricht, falls das Ergebnis dieser Prüfung negativ ist; und/oder
- in einem Schritt E30 der Hersteller prüft, ob das sechste Zertifikat, das in dem ersten Speicherbereich gespeichert ist, unverändert ist, und das Verfahren abbricht, falls das Ergebnis dieser Prüfung negativ ist; und/oder
- in einem Schritt E31 der Inhaber die Zertifikatsignierungsanforderung und das fünfte Zertifikat, das in dem dritten Speicherbereich gespeichert ist, unter Verwendung des dritten Chiffrierschlüssels verifiziert und das Verfahren abbricht, falls das Ergebnis dieser Verifikation negativ ist; und/oder
- in einem Schritt E32 der Hersteller die Zertifikatsignierungsanforderung und das siebente Zertifikat, das in dem dritten Speicherbereich gespeichert ist, unter Verwendung des neunten Chiffrierschlüssels verifiziert und das Verfahren abbricht, falls das Ergebnis dieser Verifikation negativ ist; und/oder
- in einem Schritt E33 der Inhaber prüft, ob der zweite Dechiffrierschlüssel, der in dem zweiten Speicherbereich gespeichert ist, von dem Sicherheitsmodul erzeugt worden ist, und das Verfahren abbricht, falls das Ergebnis dieser Prüfung negativ ist; und/oder
- in einem Schritt E34 der Hersteller prüft, ob der zweite Dechiffrierschlüssel, der in dem zweiten Speicherbereich gespeichert ist, von dem Sicherheitsmodul erzeugt worden ist, und das Verfahren abbricht, falls das Ergebnis dieser Prüfung negativ ist.

Das Verifizieren in Schritt E31 kann nach Bedarf auf beliebige Weise erfolgen, beispielsweise derart, dass unter Verwendung des dritten Chiffrierschlüssels geprüft wird, ob das fünfte Zertifikat zu der Zertifikatsignierungsanforderung passt und mit dem dritten Dechiffrierschlüssel signiert worden ist passt.

Das Verifizieren in Schritt E32 kann nach Bedarf auf beliebige Weise erfolgen, beispielsweise derart, dass unter Verwendung des neunten Chiffrierschlüssels geprüft wird, ob das siebente Zertifikat zu der Zertifikatsignierungsanforderung passt und mit dem neunten Dechiffrierschlüssel signiert worden ist passt.

Die Erfindung schlägt gemäß einem achtzehnten Aspekt ein Verfahren zum Einrichten einer Kommunikationsvorrichtung vor, wobei
- in einem Schritt F1 ein Inhaber der Einrichtung durch Anwendung eines asymmetrischen Kryptosystems ein Schlüsselpaar mit einem öffentlichen Schlüssel und einem privaten Schlüssel erzeugt, wobei der öffentliche Schlüssel den dritten Chiffrierschlüssel und der private Schlüssel den dritten Dechiffrierschlüssel bildet;
- in einem Schritt F2 der Inhaber das vierte Zertifikat für den fünften Chiffrierschlüssel ausstellt und an die Kommunikationsvorrichtung sendet;
- in einem Schritt F3 das vierte Zertifikat in einem vierten Speicherbereich der Kommunikationsvorrichtung oder des Sicherheitsmoduls gespeichert wird;
- in einem Schritt F4 ein Schreibschutz für den vierten Speicherbereich aktiviert wird;
- in einem Schritt F5 die Kommunikationsvorrichtung oder das Sicherheitsmodul durch Anwendung eines asymmetrischen Kryptosystems ein Schlüsselpaar mit einem öffentlichen Schlüssel und einem privaten Schlüssel erzeugt, wobei der öffentliche Schlüssel den zweiten Chiffrierschlüssel und der private Schlüssel den zweiten Dechiffrierschlüssel bildet;
- in einem Schritt F6 der zweite Dechiffrierschlüssel in einem zweiten Speicherbereich der Kommunikationsvorrichtung oder des Sicherheitsmoduls gespeichert wird;
- in einem Schritt F7 ein Schreibschutz und ein Leseschutz für den zweiten Speicherbereich aktiviert werden;
- in einem Schritt F8 die Kommunikationsvorrichtung oder das Sicherheitsmodul eine Zertifikatsignierungsanforderung für den zweiten Chiffrierschlüssel unter Verwendung des zweiten Dechiffrierschlüssels erzeugt;
- in einem Schritt F9 die Kommunikationsvorrichtung oder der Computer die Zertifikatsignierungsanforderung an den Inhaber sendet;
- in einem Schritt F10 der Inhaber die Zertifikatsignierungsanforderung unter Verwendung des dritten Dechiffrierschlüssels signiert, wodurch ein fünftes Zertifikat für den zweiten Chiffrierschlüssel ausgestellt wird, und das fünfte Zertifikat an die Kommunikationsvorrichtung sendet;
- in einem Schritt F11 entweder
   - das fünfte Zertifikat in einem dritten Speicherbereich der Kommunikationsvorrichtung oder des Sicherheitsmoduls gespeichert wird, und
   - die Kommunikationsvorrichtung oder das Sicherheitsmodul das fünfte Zertifikat unter Verwendung des vierten Zertifikats verifiziert und das Verfahren abbricht, falls das Ergebnis dieser Verifikation negativ ist,
      oder
   - die Kommunikationsvorrichtung oder der Computer das fünfte Zertifikat unter Verwendung des vierten Zertifikats verifiziert und das Verfahren abbricht, falls das Ergebnis dieser Verifikation negativ ist, und
   - das fünfte Zertifikat in einem dritten Speicherbereich der Kommunikationsvorrichtung oder des Sicherheitsmoduls gespeichert wird;
- in einem Schritt F12 ein Schreibschutz für den dritten Speicherbereich aktiviert wird.

Das gemäß diesem Aspekt vorgeschlagene Verfahren, das im Rahmen der vorliegenden Erfindung auch als Einrichtverfahren bezeichnet wird, ermöglicht eine einfache, sichere und vertrauenswürdige Einrichtung der Kommunikationsvorrichtung durch den Inhaber, ohne dass eine andere Partei beteiligt sein muss.

Die Kommunikationsvorrichtung kann nach Bedarf auf beliebige Art und Weise ausgebildet sein, beispielsweise wie eine der gemäß dem neunten, zehnten, elften oder zwölften Aspekt vorgeschlagenen Kommunikationsvorrichtungen.

Das Verifizieren in Schritt F11 kann nach Bedarf auf beliebige Weise erfolgen, beispielsweise unter Verwendung wenigstens eines zusätzlichen gültigen Zertifikats.

Die Erfindung schlägt gemäß einem neunzehnten Aspekt ein Verfahren zum Einrichten einer Kommunikationsvorrichtung vor, wobei
- in einem Schritt F13 ein Inhaber der Einrichtung durch Anwendung eines asymmetrischen Kryptosystems ein Schlüsselpaar mit einem öffentlichen Schlüssel und einem privaten Schlüssel erzeugt, wobei der öffentliche Schlüssel den dritten Chiffrierschlüssel und der private Schlüssel den dritten Dechiffrierschlüssel bildet;
- in einem Schritt F14 der Inhaber das vierte Zertifikat für den fünften Chiffrierschlüssel ausstellt und an die Kommunikationsvorrichtung sendet;
- in einem Schritt F15 ein Hersteller der Einrichtung durch Anwendung eines asymmetrischen Kryptosystems ein Schlüsselpaar mit einem öffentlichen Schlüssel und einem privaten Schlüssel erzeugt, wobei der öffentliche Schlüssel einen neunten Chiffrierschlüssel und der private Schlüssel einen neunten Dechiffrierschlüssel bildet;
- in einem Schritt F16 der Hersteller ein achtes Zertifikat für den fünften Chiffrierschlüssel ausstellt und an die Kommunikationsvorrichtung sendet;
- in einem Schritt F17 das vierte Zertifikat und das achte Zertifikat in einem vierten Speicherbereich der Kommunikationsvorrichtung oder des Sicherheitsmoduls gespeichert werden;
- in einem Schritt F18 ein Schreibschutz für den vierten Speicherbereich aktiviert wird;
- in einem Schritt F19 die Kommunikationsvorrichtung oder das Sicherheitsmodul durch Anwendung eines asymmetrischen Kryptosystems ein Schlüsselpaar mit einem öffentlichen Schlüssel und einem privaten Schlüssel erzeugt, wobei der öffentliche Schlüssel den zweiten Chiffrierschlüssel und der private Schlüssel den zweiten Dechiffrierschlüssel bildet;
- in einem Schritt F20 der zweite Dechiffrierschlüssel in einem zweiten Speicherbereich der Kommunikationsvorrichtung oder des Sicherheitsmoduls gespeichert wird;
- in einem Schritt F21 ein Schreibschutz und ein Leseschutz für den zweiten Speicherbereich aktiviert werden;
- in einem Schritt F22 die Kommunikationsvorrichtung oder das Sicherheitsmodul eine Zertifikatsignierungsanforderung für den zweiten Chiffrierschlüssel unter Verwendung des zweiten Dechiffrierschlüssels erzeugt;
- in einem Schritt F23 die Kommunikationsvorrichtung oder der Computer die Zertifikatsignierungsanforderung an den Inhaber sendet;
- in einem Schritt F24 der Inhaber die Zertifikatsignierungsanforderung unter Verwendung des dritten Dechiffrierschlüssels signiert, wodurch ein fünftes Zertifikat für den zweiten Chiffrierschlüssel ausgestellt wird, und das fünfte Zertifikat an die Kommunikationsvorrichtung sendet;
- in einem Schritt F25 die Kommunikationsvorrichtung oder der Computer die Zertifikatsignierungsanforderung an den Hersteller sendet;
- in einem Schritt F26 der Hersteller die Zertifikatsignierungsanforderung unter Verwendung des neunten Dechiffrierschlüssels signiert, wodurch ein siebentes Zertifikat für den zweiten Chiffrierschlüssel ausgestellt wird, und das siebente Zertifikat an die Kommunikationsvorrichtung sendet;
- in einem Schritt F27 entweder
   - das fünfte Zertifikat und das siebente Zertifikat in einem dritten Speicherbereich der Kommunikationsvorrichtung oder des Sicherheitsmoduls gespeichert werden, und
   - die Kommunikationsvorrichtung oder das Sicherheitsmodul
      - das fünfte Zertifikat unter Verwendung des vierten Zertifikats verifiziert und das Verfahren abbricht, falls das Ergebnis dieser Verifikation negativ ist, und
      - das siebente Zertifikat unter Verwendung des achten Zertifikats verifiziert und das Verfahren abbricht, falls das Ergebnis dieser Verifikation negativ ist,
      oder
   - die Kommunikationsvorrichtung oder der Computer
      - das fünfte Zertifikat unter Verwendung des vierten Zertifikats verifiziert und das Verfahren abbricht, falls das Ergebnis dieser Verifikation negativ ist,
      - das siebente Zertifikat unter Verwendung des achten Zertifikats verifiziert und das Verfahren abbricht, falls das Ergebnis dieser Verifikation negativ ist, und
      - das fünfte Zertifikat und das siebente Zertifikat in einem dritten Speicherbereich der Kommunikationsvorrichtung oder des Sicherheitsmoduls gespeichert werden;
- in einem Schritt F28 ein Schreibschutz für den dritten Speicherbereich aktiviert wird.

Das gemäß diesem Aspekt vorgeschlagene Verfahren, das im Rahmen der vorliegenden Erfindung auch als Einrichtverfahren bezeichnet wird, ermöglicht eine einfache, sichere und vertrauenswürdige Einrichtung der Kommunikationsvorrichtung durch den Inhaber und den Hersteller, ohne dass eine andere Partei beteiligt sein muss.

Die Kommunikationsvorrichtung kann nach Bedarf auf beliebige Art und Weise ausgebildet sein, beispielsweise wie eine der gemäß dem neunten, zehnten, elften oder zwölften Aspekt vorgeschlagenen Kommunikationsvorrichtungen.

Jedes Verifizieren in Schritt F27 kann nach Bedarf auf beliebige Weise erfolgen, beispielsweise unter Verwendung wenigstens eines zusätzlichen gültigen Zertifikats.

In einer beispielhaften Ausführungsform der Erfindung ist bestimmt, dass
- in einem Schritt F29 der Inhaber prüft, ob das vierte Zertifikat, das in dem vierten Speicherbereich gespeichert ist, unverändert ist, und das Verfahren abbricht, falls das Ergebnis dieser Prüfung negativ ist; und/oder
- in einem Schritt F30 der Hersteller prüft, ob das achte Zertifikat, das in dem vierten Speicherbereich gespeichert ist, unverändert ist, und das Verfahren abbricht, falls das Ergebnis dieser Prüfung negativ ist; und/oder
- in einem Schritt F31 der Inhaber die Zertifikatsignierungsanforderung und das fünfte Zertifikat, das in dem dritten Speicherbereich gespeichert ist, unter Verwendung des dritten Chiffrierschlüssels verifiziert und das Verfahren abbricht, falls das Ergebnis dieser Verifikation negativ ist; und/oder
- in einem Schritt F32 der Hersteller die Zertifikatsignierungsanforderung und das siebente Zertifikat, das in dem dritten Speicherbereich gespeichert ist, unter Verwendung des neunten Chiffrierschlüssels verifiziert und das Verfahren abbricht, falls das Ergebnis dieser Verifikation negativ ist; und/oder
- in einem Schritt F33 der Inhaber prüft, ob der zweite Dechiffrierschlüssel, der in dem zweiten Speicherbereich gespeichert ist, von dem Sicherheitsmodul erzeugt worden ist, und das Verfahren abbricht, falls das Ergebnis dieser Prüfung negativ ist; und/oder
- in einem Schritt F34 der Hersteller prüft, ob der zweite Dechiffrierschlüssel, der in dem zweiten Speicherbereich gespeichert ist, von dem Sicherheitsmodul erzeugt worden ist, und das Verfahren abbricht, falls das Ergebnis dieser Prüfung negativ ist.

Das Verifizieren in Schritt F31 kann nach Bedarf auf beliebige Weise erfolgen, beispielsweise derart, dass unter Verwendung des dritten Chiffrierschlüssels geprüft wird, ob das fünfte Zertifikat zu der Zertifikatsignierungsanforderung passt und mit dem dritten Dechiffrierschlüssel signiert worden ist passt.

Das Verifizieren in Schritt E32 kann nach Bedarf auf beliebige Weise erfolgen, beispielsweise derart, dass unter Verwendung des neunten Chiffrierschlüssels geprüft wird, ob das siebente Zertifikat zu der Zertifikatsignierungsanforderung passt und mit dem neunten Dechiffrierschlüssel signiert worden ist passt.

Die Erfindung schlägt gemäß einem zwanzigsten Aspekt ein System vor, umfassend
- wenigstens eine Absendervorrichtung;
- wenigstens eine Einrichtung; und
- wenigstens eine Kommunikationsvorrichtung, die wie eine der gemäß dem dritten, vierten, fünften oder sechsten Aspekt vorgeschlagenen Kommunikationsvorrichtungen ausgebildet ist und mit der wenigstens einen Absendervorrichtung und der wenigstens einen Einrichtung verbunden ist.

Das System kann nach Bedarf beispielsweise keine zusätzliche oder wenigstens eine zusätzliche Absendervorrichtung, keine zusätzliche oder wenigstens eine zusätzliche Einrichtung und/oder keine zusätzliche oder wenigstens eine zusätzliche Kommunikationsvorrichtung, die wie eine der gemäß dem dritten, vierten, fünften oder sechsten Aspekt vorgeschlagenen Kommunikationsvorrichtungen ausgebildet ist und mit wenigstens einer der Absendervorrichtungen und wenigstens einer der Einrichtungen verbunden ist, umfassen.

Die Erfindung schlägt gemäß einem einundzwanzigsten Aspekt ein System vor, umfassend
- wenigstens eine Empfängervorrichtung;
- wenigstens eine Einrichtung; und
- wenigstens eine Kommunikationsvorrichtung, die wie eine der gemäß dem neunten, zehnten, elften oder zwölften Aspekt vorgeschlagenen Kommunikationsvorrichtungen ausgebildet ist und mit der wenigstens einen Empfängervorrichtung und der wenigstens einen Einrichtung verbunden ist.

In einer beispielhaften Ausführungsform dieses Aspektes ist bestimmt, dass
- das System wenigstens eine Absendervorrichtung umfasst;
- wenigstens eine der Kommunikationsvorrichtungen wie eine der gemäß dem dritten, vierten, fünften oder sechsten Aspekt vorgeschlagenen Kommunikationsvorrichtungen ausgebildet ist und mit der wenigstens einen Absendervorrichtung verbunden ist.

Das System kann beispielsweise keine zusätzliche oder wenigstens eine zusätzliche Empfängervorrichtung, keine zusätzliche oder wenigstens eine zusätzliche Einrichtung, keine zusätzliche oder wenigstens eine zusätzliche Absendervorrichtung und/oder keine zusätzliche oder wenigstens eine zusätzliche Kommunikationsvorrichtung, die wie eine der gemäß dem neunten, zehnten, elften oder zwölften Aspekt vorgeschlagenen Kommunikationsvorrichtungen ausgebildet ist und mit wenigstens einer der Empfängervorrichtungen und wenigstens einer der Einrichtungen verbunden ist und die optional wie eine der gemäß dem dritten, vierten, fünften oder sechsten Aspekt vorgeschlagenen Kommunikationsvorrichtungen ausgebildet ist und/oder mit wenigstens einer der Absendervorrichtungen verbunden ist, umfassen.

In einer beispielhaften Ausführungsform der Erfindung ist bestimmt, dass das System umfasst
- wenigstens eine Absendervorrichtung;
- wenigstens eine Kommunikationsvorrichtung, die wie eine der gemäß dem dritten, vierten, fünften oder sechsten Aspekt vorgeschlagenen Kommunikationsvorrichtungen ausgebildet ist und mit der wenigstens einen Absendervorrichtung verbunden ist.

Das System kann beispielsweise keine zusätzliche oder wenigstens eine zusätzliche Absendervorrichtung und/oder keine zusätzliche oder wenigstens eine zusätzliche Kommunikationsvorrichtung, die wie eine der gemäß dem dritten, vierten, fünften oder sechsten Aspekt vorgeschlagenen Kommunikationsvorrichtungen ausgebildet ist und mit wenigstens einer der Absendervorrichtungen verbunden ist, umfassen.

Jede Einrichtung, jede Absendervorrichtung und jede Empfängervorrichtung können nach Bedarf auf beliebige Weise ausgebildet sein und jeweils beispielsweise wenigstens ein Messgerät, wenigstens eine Maschine, wenigstens einen Computer, wenigstens eine Produktionsanlage, wenigstens ein technisches System und/oder wenigstens einen der eingangs genannten IIoT-Teilnehmer umfassen. Jede Absendervorrichtung kann beispielsweise eine der Empfängervorrichtungen bilden, und jede Empfängervorrichtung kann beispielsweise eine der Absendervorrichtungen bilden.

Jeder Identifikator kann nach Bedarf auf beliebige Weise ausgebildet sein und beispielsweise eine E-Mail, Seriennummer und/oder Personalnummer umfassen.

Jedes Zertifikat kann nach Bedarf auf beliebige Weise ausgebildet sein, beispielsweise als Stammzertifikat oder Zwischenzertifikat und/oder als Public-Key-Zertifikat oder Attributzertifikat. Ein Zertifikat ist insbesondere gültig, wenn es weder widerrufen noch abgelaufen ist.

Jeder Computer kann nach Bedarf auf beliebige Weise ausgebildet sein, beispielsweise als Einplatinencomputer und/oder derart, dass er und wenigstens eines der Sicherheitsmodule in einem System-on-a-Chip, kurz "SoC", integriert sind, unlösbar miteinander verbunden sind, auf einer gemeinsamen Platine verlötet sind, gemeinsam versiegelt sind und/oder gemeinsam vergossen sind. Jedes Sicherheitsmodul kann nach Bedarf auf beliebige Weise ausgebildet sein, beispielsweise gemäß dem Standard FIPS 140-2, gemäß der TrustZone-Technologie von Arm Ltd., wie ein YubiKey und/oder derart, dass es wenigstens einen YubiKey umfasst.

Jeder Übertragungsschutz, jeder Schreibschutz und jeder Leseschutz kann nach Bedarf auf beliebige Weise realisiert sein, beispielsweise gemäß dem Standard FIPS 140-2, gemäß der TrustZone-Technologie von Arm Ltd., gemäß der Secure-Channel-Spezifikation von Yubico Ltd. und/oder so, wie er in einem YubiKey realisiert ist, und/oder indem er Bus Encyption, ein Challenge-Response-Verfahren und/oder ein asymmetrisches Kryptosystem umfasst, und/oder indem der jeweilige Computer und das jeweilige Sicherheitsmodul unlösbar miteinander verbunden, auf einer gemeinsamen Platine verlötet, einzeln oder gemeinsam versiegelt und/oder gemeinsam vergossen sind.

Jedes Versiegeln kann beispielsweise derart erfolgen, dass der Computer und das Sicherheitsmodul jeweils durch ein eigenes Siegel mit einer gemeinsamen Platine oder einem anderen Bauelement verbunden oder durch ein gemeinsames Siegel miteinander verbunden sind. Jedes Siegel kann nach Bedarf auf beliebige Weise ausgebildet sein, beispielsweise als Klebeetikett oder Schraubensicherungslack oder Plombierlack. Jedes Vergießen kann beispielsweise unter Verwendung von Gießharz erfolgen, das den Computer und das Sicherheitsmodul miteinander verbindet und/oder möglichst vollständig umschließt.

Jedes asymmetrische Kryptosystem kann nach Bedarf auf beliebige Weise ausgebildet sein, beispielsweise gemäß dem RSA-Kryptosystem, dem Elgamal-Kryptosystem oder dem ECC-Kryptosystem.

Jedes vorgeschlagene Verfahren kann mit wenigstens einem der übrigen vorgeschlagenen Verfahren kombiniert sein und/oder kann nach Bedarf auf beliebige Weise ausgebildet sein, beispielsweise als ein computerimplementiertes Verfahren.

Jede vorgeschlagene Kommunikationsvorrichtung kann mit wenigstens einer der übrigen vorgeschlagenen Kommunikationsvorrichtungen kombiniert sein und/oder kann nach Bedarf auf beliebige Weise ausgebildet sein, beispielsweise derart, dass sie ein Computer ist oder wenigstens einen Computer umfasst und/oder zum zumindest teilweisen Ausführen wenigstens eines der vorgeschlagenen Verfahren ausgebildet ist.

Jedes vorgeschlagene System kann mit wenigstens einem der übrigen vorgeschlagenen Systeme kombiniert sein.

Die Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in
- FIG. 1: ein Blockschaltbild einer ersten Ausführungsform eines Systems, wobei das System eine Absendervorrichtung, eine Einrichtung und eine erste Ausführungsform einer Kommunikationsvorrichtung zur Verwendung in einem Steuerverfahren zum Steuern der Einrichtung umfasst;
- FIG. 2: eine erste Ausführungsform eines Steuerverfahrens zum Steuern einer Einrichtung, insbesondere der Einrichtung aus FIG. 1;
- FIG. 3: eine zweite Ausführungsform des Steuerverfahrens zum Steuern einer Einrichtung, insbesondere der Einrichtung aus FIG. 1;
- FIG. 4: ein Blockschaltbild einer zweiten Ausführungsform eines Systems, wobei das System eine Empfängervorrichtung, eine Einrichtung und eine zweite Ausführungsform einer Kommunikationsvorrichtung zur Verwendung in einem Sendeverfahren zum Senden von Betriebsdaten der Einrichtung an die Empfängervorrichtung umfasst;
- FIG. 5: eine erste Ausführungsform eines Sendeverfahrens zum Senden von Betriebsdaten einer Einrichtung an eine Empfängervorrichtung, insbesondere der Einrichtung aus FIG. 4 an die Empfängervorrichtung;
- FIG. 6: eine zweite Ausführungsform des Sendeverfahrens zum Senden von Betriebsdaten einer Einrichtung an eine Empfängervorrichtung, insbesondere der Einrichtung aus FIG. 4 an die Empfängervorrichtung;
- FIG. 7: eine erste Ausführungsform eines Einrichtverfahrens zum Einrichten einer Kommunikationsvorrichtung, insbesondere der Kommunikationsvorrichtung aus FIG. 1;
- FIG. 8: eine zweite Ausführungsform des Einrichtverfahrens zum Einrichten einer Kommunikationsvorrichtung, insbesondere der Kommunikationsvorrichtung aus FIG. 1;
- FIG. 9: eine dritte Ausführungsform eines Einrichtverfahrens zum Einrichten einer Kommunikationsvorrichtung, insbesondere der Kommunikationsvorrichtung aus FIG. 4; und
- FIG. 10: eine vierte Ausführungsform des Einrichtverfahrens zum Einrichten einer Kommunikationsvorrichtung, insbesondere der Kommunikationsvorrichtung aus FIG. 4.

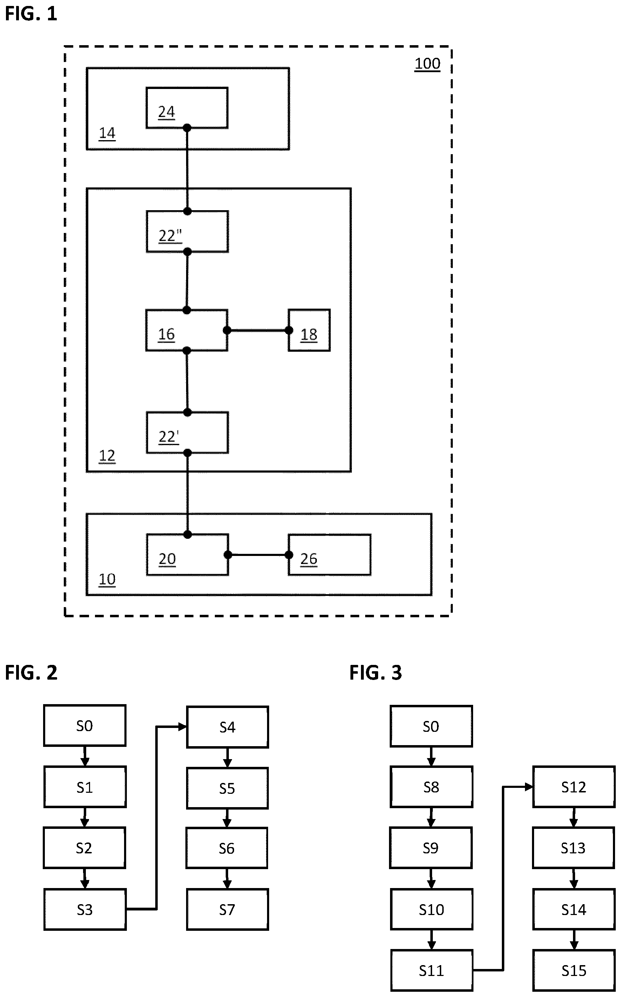

In FIG. 1 ist eine erste Ausführungsform eines Systems 100 schematisch dargestellt, das eine technische Einrichtung 10, eine Kommunikationsvorrichtung 12, die gemäß einer ersten Ausführungsform ausgebildet ist, und eine Absendervorrichtung 14 umfasst.

Die Einrichtung 10 umfasst beispielhaft eine CNC-Maschine 26 und eine Kommunikationsschnittstelle 20, die mit der CNC-Maschine 26 verbunden ist und beispielhaft eine USB-Schnittstelle bildet.

Die Absendervorrichtung 14 bildet beispielhaft einen Laptop und umfasst eine Kommunikationsschnittstelle 24, die beispielhaft eine Funkschnittstelle bildet.

Die Kommunikationsvorrichtung 12 umfasst einen Computer 16, ein Sicherheitsmodul 18, das beispielhaft ein Hardware-Sicherheitsmodul bildet, eine erste Kommunikationsschnittstelle 22', die beispielhaft eine mit der Kommunikationsschnittstelle 20 korrespondierende USB-Schnittstelle bildet, und eine zweite Kommunikationsschnittstelle 22", die beispielhaft eine mit der Kommunikationsschnittstelle 24 korrespondierende Funkschnittstelle bildet. Der Computer 16 ist mit dem Sicherheitsmodul 18 und den Kommunikationsschnittstellen 22', 22" verbunden. Die erste Kommunikationsschnittstelle 22' ist mit der Kommunikationsschnittstelle 20 verbunden. Die zweite Kommunikationsschnittstelle 22" ist mit der Kommunikationsschnittstelle 24 verbunden.

In FIG. 2 ist eine erste Ausführungsform eines Steuerverfahrens zum Steuern einer Einrichtung schematisch dargestellt, wobei mit dieser Ausführungsform beispielhaft die Einrichtung 10 aus FIG. 1 mit Hilfe der Kommunikationsvorrichtung 12 steuerbar ist oder gesteuert werden kann. Die Einrichtung 10, die Kommunikationsvorrichtung 12 und die Absendervorrichtung 14 sind derart ausgebildet, dass sie dieses Steuerverfahren ausführen können.

In einem Schritt S0 wird die Kommunikationsvorrichtung 12 mit Hilfe der Kommunikationsschnittstellen 22', 20 mit der Einrichtung 10 und mit Hilfe der Kommunikationsschnittstelle 22", 24 mit der Absendervorrichtung 14 verbunden.

In einem Schritt S1, der auf Schritt S0 folgt, empfängt die Kommunikationsvorrichtung 12 mit Hilfe des Computers 16 einen Klartext und eine Signatur von der Absendervorrichtung 14.

In einem Schritt S2, der auf Schritt S1 folgt, verifiziert die Kommunikationsvorrichtung 12 mit Hilfe des Computers 16 und des Sicherheitsmoduls 18 den ersten Identifikator ID1, der der Absendervorrichtung 14 zugeordnet und in dem Computer 16 gespeichert ist, unter Verwendung des gültigen ersten Zertifikats Z1, das in dem Sicherheitsmodul 18 gespeichert ist. Der Computer 16 bricht das Verfahren ab, falls das Ergebnis dieser Verifikation negativ ist.

In einem Schritt S3, der auf Schritt S2 folgt, verifiziert die Kommunikationsvorrichtung 12 mit Hilfe des Computers 16 die empfangene Signatur und den empfangenen Klartext unter Verwendung des ersten Chiffrierschlüssels CS1, der in dem Computer 16 gespeichert ist. Der Computer 16 bricht das Verfahren ab, falls das Ergebnis dieser Verifikation negativ ist.

In einem Schritt S4, der auf Schritt S3 folgt, prüft die Kommunikationsvorrichtung 12 mit Hilfe des Computers 16, ob eine Steueranweisung für die Einrichtung 10 in dem Klartext enthalten ist. Der Computer 16 bricht das Verfahren ab, falls das Ergebnis dieser Prüfung negativ ist.

In einem Schritt S5, der auf Schritt S4 folgt, prüft die Kommunikationsvorrichtung 12 mit Hilfe des Computers 16, ob eine Berechtigung für die Steueranweisung dem ersten Chiffrierschlüssel CS1 und dem ersten Identifikator ID1 zugeordnet ist. Der Computer 16 bricht das Verfahren ab, falls das Ergebnis dieser Prüfung negativ ist.

In einem Schritt S6, der auf Schritt S5 folgt, erzeugt die Kommunikationsvorrichtung mit Hilfe des Computers 16 einen Steuerbefehl für die Einrichtung 10 unter Verwendung der Steueranweisung, die in dem wiederhergestellten Klartext enthalten ist.

In einem Schritt S7, der auf Schritt S6 folgt, sendet die Kommunikationsvorrichtung 12 mit Hilfe des Computers 16 den Steuerbefehl an die Einrichtung 10, wodurch die Einrichtung 10 gesteuert wird.

In FIG. 3 ist eine zweite Ausführungsform des Steuerverfahrens zum Steuern einer Einrichtung schematisch dargestellt, die der ersten Ausführungsform ähnelt, sodass im Folgenden vor Allem die Unterschiede näher erläutert werden. Die Einrichtung 10, die Kommunikationsvorrichtung 12 und die Absendervorrichtung 14 sind derart ausgebildet, dass sie dieses Steuerverfahren ausführen können.

In einem Schritt S8, der auf Schritt S0 folgt, empfängt die Kommunikationsvorrichtung 12 mit Hilfe des Computers 16 anstelle eines Klartextes einen Geheimtext und eine Signatur von der Absendervorrichtung 14, wobei der Geheimtext einen verschlüsselten Klartext darstellt.

In einem Schritt S9, der auf Schritt S8 folgt, verifiziert die Kommunikationsvorrichtung 12 mit Hilfe des Computers 16 und des Sicherheitsmoduls 18 den zweiten Identifikator ID2, der der Absendervorrichtung 14 zugeordnet und in dem Computer 16 gespeichert ist und beispielhaft dem ersten Identifikator ID1 gleicht, und den neunten Chiffrierschlüssel CS9, der in dem Computer 16 gespeichert ist, unter Verwendung des gültigen achten Zertifikats Z8, das in dem Sicherheitsmodul 18 gespeichert ist und beispielhaft dem ersten Zertifikat Z1 gleicht. Der Computer 16 bricht das Verfahren ab, falls das Ergebnis dieser Verifikation negativ ist.

In einem Schritt S10, der auf Schritt S9 folgt, entschlüsselt die Kommunikationsvorrichtung 12 mit Hilfe des Computers 16 und des Sicherheitsmoduls 18 den empfangenen Geheimtext unter Verwendung des zweiten Dechiffrierschlüssels DC2, der der Kommunikationsvorrichtung 12 zugeordnet und in dem Sicherheitsmodul 18 gespeichert ist, wodurch der Klartext wiederhergestellt wird.

In einem Schritt S11, der auf Schritt S10 folgt, verifiziert die Kommunikationsvorrichtung 12 mit Hilfe des Computers 16 die empfangene Signatur und anstelle des empfangenen Klartextes den empfangenen Geheimtext unter Verwendung des ersten Chiffrierschlüssels CS1, der in dem Computer 16 gespeichert ist. Der Computer 16 bricht das Verfahren ab, falls das Ergebnis dieser Verifikation negativ ist.

Ein Schritt S12, der auf Schritt S11 folgt, entspricht Schritt S4. Ein Schritt S13, der auf Schritt S12 folgt, entspricht Schritt S5. Ein Schritt S14, der auf Schritt S13 folgt, entspricht Schritt S6. Ein Schritt S15, der auf Schritt S14 folgt, entspricht Schritt S7.

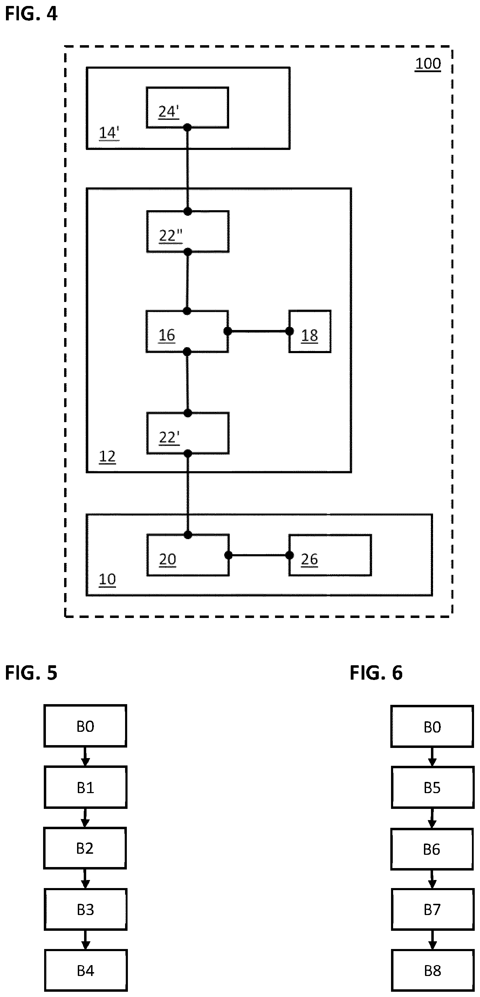

In FIG. 4 ist eine zweite Ausführungsform des Systems 100 schematisch dargestellt. Diese Ausführungsform ähnelt der ersten Ausführungsform, sodass im Folgenden vor Allem die Unterschiede näher erläutert werden. Bei dieser Ausführungsform umfasst das System 100 anstelle der Absendervorrichtung 14 eine Empfängervorrichtung 14', und die Kommunikationsvorrichtung 12 ist gemäß einer zweiten Ausführungsform ausgebildet, die der ersten Ausführungsform ähnelt, sodass im Folgenden vor Allem die Unterschiede näher erläutert werden.

Die Empfängervorrichtung 14' bildet beispielhaft einen Laptop und umfasst eine Kommunikationsschnittstelle 24', die beispielhaft eine Funkschnittstelle bildet.

Die zweite Kommunikationsschnittstelle 22" bildet beispielhaft eine mit der Kommunikationsschnittstelle 24' korrespondierende Funkschnittstelle. Die zweite Kommunikationsschnittstelle 22" ist mit der Kommunikationsschnittstelle 24' verbunden.

In FIG. 5 ist eine erste Ausführungsform eines Sendeverfahrens zum Senden von Betriebsdaten einer Einrichtung an eine Empfängervorrichtung schematisch dargestellt, wobei mit dieser Ausführungsform beispielhaft Betriebsdaten der Einrichtung 10 aus FIG. 4 mit Hilfe der Kommunikationsvorrichtung 12 an die Empfängervorrichtung 14' aus FIG. 4 gesendet werden können. Die Einrichtung 10, die Kommunikationsvorrichtung 12 und die Empfängervorrichtung 14' sind derart ausgebildet, dass sie dieses Sendeverfahren ausführen können.

In einem Schritt B0 wird die Kommunikationsvorrichtung 12 mit Hilfe der Kommunikationsschnittstellen 22', 20 mit der Einrichtung 10 und mit Hilfe der Kommunikationsschnittstelle 22", 24' mit der Empfängervorrichtung 14' verbunden.

In einem Schritt B1, der auf Schritt B0 folgt, empfängt die Kommunikationsvorrichtung 12 mit Hilfe des Computers 16 die Betriebsdaten von der Einrichtung 10.

In einem Schritt B2, der auf Schritt B1 folgt, verifiziert die Kommunikationsvorrichtung 12 mit Hilfe des Computers 16 und des Sicherheitsmoduls 18 den zweiten Identifikator ID2, der der Empfängervorrichtung 14' zugeordnet und in dem Computer 16 gespeichert ist, und den fünften Chiffrierschlüssel CS5, der in dem Computer 16 gespeichert ist, unter Verwendung des gültigen vierten Zertifikats Z4, das in dem Sicherheitsmodul 18 gespeichert ist. Der Computer 16 bricht das Verfahren ab, falls das Ergebnis dieser Verifikation negativ ist.

In einem Schritt B3, der auf Schritt B2 folgt, prüft die Kommunikationsvorrichtung 12 mit Hilfe des Computers 16, ob eine Berechtigung für den Empfang der Betriebsdaten dem fünften Chiffrierschlüssel CS5 und dem zweiten Identifikator ID2 zugeordnet ist. Der Computer 16 bricht das Verfahren ab, falls das Ergebnis dieser Prüfung negativ ist.

In einem Schritt B4, der auf Schritt B3 folgt, signiert die Kommunikationsvorrichtung 12 mit Hilfe des Sicherheitsmoduls 18 die Betriebsdaten unter Verwendung des sechsten Dechiffrierschlüssels, der der Kommunikationsvorrichtung 12 zugeordnet und in dem Sicherheitsmodul 18 gespeichert ist, wodurch eine Signatur erzeugt wird. Dann sendet die Kommunikationsvorrichtung 12 mit Hilfe des Computers 16 die Betriebsdaten und die Signatur an die Empfängervorrichtung 14'.

In FIG. 1 ist eine zweite Ausführungsform des Sendeverfahrens zum Senden von Betriebsdaten einer Einrichtung an eine Empfängervorrichtung schematisch dargestellt, die der ersten Ausführungsform ähnelt, sodass im Folgenden vor Allem die Unterschiede näher erläutert werden. Die Einrichtung 10, die Kommunikationsvorrichtung 12 und die Empfängervorrichtung 14' sind derart ausgebildet, dass sie dieses Sendeverfahren ausführen können.

Ein Schritt B5, der auf Schritt B0 folgt, entspricht Schritt B1. Ein Schritt B6, der auf Schritt B5 folgt, entspricht Schritt B2. Ein Schritt B7, der auf Schritt B6 folgt, entspricht Schritt B3.

In einem Schritt B8, der auf Schritt B7 folgt, verschlüsselt die Kommunikationsvorrichtung 12 mit Hilfe des Computers 16 die Betriebsdaten unter Verwendung des fünften Chiffrierschlüssels CS5. Dann signiert die Kommunikationsvorrichtung 12 mit Hilfe des Sicherheitsmoduls 18 anstelle der Betriebsdaten die verschlüsselten Betriebsdaten unter Verwendung des sechsten Dechiffrierschlüssels, der der Kommunikationsvorrichtung 12 zugeordnet und in dem Sicherheitsmodul 18 gespeichert ist, wodurch eine Signatur erzeugt wird. Dann sendet die Kommunikationsvorrichtung 12 mit Hilfe des Computers 16 anstelle der Betriebsdaten die verschlüsselten Betriebsdaten und die Signatur an die Empfängervorrichtung 14'.

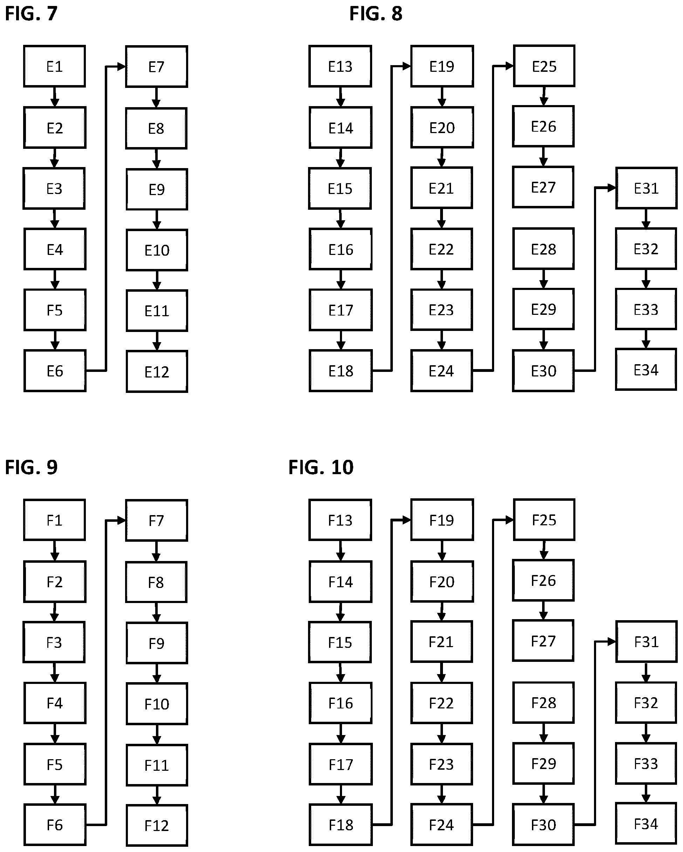

In FIG. 7 ist eine erste Ausführungsform eines Einrichtverfahrens zum Einrichten einer Kommunikationsvorrichtung schematisch dargestellt, wobei mit dieser Ausführungsform beispielhaft die Kommunikationsvorrichtung 12 aus FIG. 1 eingerichtet werden kann.

In einem Schritt E1 erzeugt ein Inhaber der Einrichtung 10 durch Anwendung eines asymmetrischen Kryptosystems ein Schlüsselpaar mit einem öffentlichen Schlüssel und einem privaten Schlüssel, wobei der öffentliche Schlüssel den dritten Chiffrierschlüssel CS3 und der private Schlüssel den dritten Dechiffrierschlüssel DS3 bildet.

In einem Schritt E2, der auf Schritt E1 folgt, stellt der Inhaber das erste Zertifikat Z1 für den ersten Chiffrierschlüssel CS1 aus und sendet es an die Kommunikationsvorrichtung 12.

In einem Schritt E3, der auf Schritt E2 folgt, speichert der Computer 16 das erste Zertifikat Z1 in einem ersten Speicherbereich des Sicherheitsmoduls 18.

In einem Schritt E4, der auf Schritt E3 folgt, aktiviert der Computer 16 einen Schreibschutz für den ersten Speicherbereich.

In einem Schritt E5, der auf Schritt E4 folgt, erzeugt das Sicherheitsmodul 18 durch Anwendung eines asymmetrischen Kryptosystems ein Schlüsselpaar mit einem öffentlichen Schlüssel und einem privaten Schlüssel, wobei der öffentliche Schlüssel den zweiten Chiffrierschlüssel CS2 und der private Schlüssel den zweiten Dechiffrierschlüssel DS2 bildet.

In einem Schritt E6, der auf Schritt E5 folgt, speichert das Sicherheitsmodul 18 den zweiten Dechiffrierschlüssel DS2 in einem zweiten Speicherbereich des Sicherheitsmoduls 18.

In einem Schritt E7, der auf Schritt E6 folgt, aktiviert das Sicherheitsmodul 18 oder der Computer 16 einen Schreibschutz und einen Leseschutz für den zweiten Speicherbereich.

In einem Schritt E8, der auf Schritt E7 folgt, erzeugt das Sicherheitsmodul 18 eine Zertifikatsignierungsanforderung für den zweiten Chiffrierschlüssel CS2 unter Verwendung des zweiten Dechiffrierschlüssels DS2.

In einem Schritt E9, der auf Schritt E8 folgt, sendet der Computer 16 die Zertifikatsignierungsanforderung an den Inhaber.

In einem Schritt E10, der auf Schritt E9 folgt, signiert der Inhaber die Zertifikatsignierungsanforderung unter Verwendung des dritten Dechiffrierschlüssels DS3, wodurch ein fünftes Zertifikat Z5 für den zweiten Chiffrierschlüssel CS2 ausgestellt wird, und sendet das fünfte Zertifikat Z5 an die Kommunikationsvorrichtung 12.

In einem Schritt E11, der auf Schritt E10 folgt, speichert der Computer 16 das fünfte Zertifikat Z5 in einem dritten Speicherbereich des Sicherheitsmoduls 18. Dann verifiziert das Sicherheitsmodul 18 das fünfte Zertifikat Z5 unter Verwendung des ersten Zertifikats Z1 und bricht das Verfahren ab, falls das Ergebnis dieser Verifikation negativ ist.

In einem alternativen Schritt E11 verifiziert der Computer 16 das fünfte Zertifikat Z5 unter Verwendung des ersten Zertifikats Z1 und bricht das Verfahren ab, falls das Ergebnis dieser Verifikation negativ ist. Dann speichert der Computer 16 das fünfte Zertifikat Z5 in einem dritten Speicherbereich des Sicherheitsmoduls 18.

In einem Schritt E12, der auf Schritt E11 folgt, aktiviert das Sicherheitsmodul 18 oder der Computer 16 einen Schreibschutz für den dritten Speicherbereich.

Nun ist die Kommunikationsvorrichtung 12 eingerichtet und kann in den Steuerverfahren aus FIG. 2 und FIG. 3 eingesetzt werden.

In FIG. 8 ist eine zweite Ausführungsform des Einrichtverfahrens zum Einrichten einer Kommunikationsvorrichtung schematisch dargestellt, die der ersten Ausführungsform ähnelt, sodass im Folgenden vor Allem die Unterschiede näher erläutert werden.

Ein Schritt E13 entspricht Schritt E1. Ein Schritt E14, der auf Schritt E13 folgt, entspricht Schritt E2.

In einem Schritt E15, der auf Schritt E14 folgt, erzeugt ein Hersteller der Einrichtung 10 durch Anwendung eines asymmetrischen Kryptosystems ein Schlüsselpaar mit einem öffentlichen Schlüssel und einem privaten Schlüssel, wobei der öffentliche Schlüssel einen neunten Chiffrierschlüssel CS9 und der private Schlüssel einen neunten Dechiffrierschlüssel DS9 bildet.

In einem Schritt E16, der auf Schritt E15 folgt, stellt der Hersteller ein sechstes Zertifikat Z6 für den ersten Chiffrierschlüssel CS1 aus und sendet es an die Kommunikationsvorrichtung 12.

In einem Schritt E17, der auf Schritt E16 folgt, speichert der Computer 16 das erste Zertifikat Z1 und das sechste Zertifikat Z6 in einem ersten Speicherbereich des Sicherheitsmoduls 18.

Ein Schritt E18, der auf Schritt E17 folgt, entspricht Schritt E4. Ein Schritt E19, der auf Schritt E18 folgt, entspricht Schritt E5. Ein Schritt E20, der auf Schritt E19 folgt, entspricht Schritt E6. Ein Schritt E21, der auf Schritt E20 folgt, entspricht Schritt E7. Ein Schritt E22, der auf Schritt E21 folgt, entspricht Schritt E8. Ein Schritt E23, der auf Schritt E22 folgt, entspricht Schritt E9. Ein Schritt E24, der auf Schritt E23 folgt, entspricht Schritt E10. In einem Schritt E25, der auf Schritt E24 folgt, sendet der Computer 16 die Zertifikatsignierungsanforderung an den Hersteller.

In einem Schritt E26, der auf Schritt E25 folgt, signiert der Hersteller die Zertifikatsignierungsanforderung unter Verwendung des neunten Dechiffrierschlüssels DS9 signiert, wodurch ein siebentes Zertifikat Z7 für den zweiten Chiffrierschlüssel CS2 ausgestellt wird, und sendet das siebente Zertifikat Z7 an die Kommunikationsvorrichtung 12.

In einem Schritt E1, der auf Schritt E0 folgt, speichert der Computer 16 das fünfte Zertifikat Z5 und das siebente Zertifikat Z7 in einem dritten Speicherbereich des Sicherheitsmoduls 18. Dann verifiziert das Sicherheitsmodul 18 das fünfte Zertifikat Z5 unter Verwendung des ersten Zertifikats Z1 und bricht das Verfahren ab, falls das Ergebnis dieser Verifikation negativ ist. Außerdem verifiziert das Sicherheitsmodul 18 das siebente Zertifikat Z7 unter Verwendung des sechsten Zertifikats Z6 und bricht das Verfahren ab, falls das Ergebnis dieser Verifikation negativ ist.

In einem alternativen Schritt E1 verifiziert der Computer 16 das fünfte Zertifikat Z5 unter Verwendung des ersten Zertifikats Z1 und bricht das Verfahren ab, falls das Ergebnis dieser Verifikation negativ ist. Außerdem verifiziert der Computer 16 das siebente Zertifikat Z7 unter Verwendung des sechsten Zertifikats Z6 und bricht das Verfahren ab, falls das Ergebnis dieser Verifikation negativ ist. Dann speichert der Computer 16 das fünfte Zertifikat Z5 und das siebente Zertifikat Z7 in einem dritten Speicherbereich des Sicherheitsmoduls 18.

Ein Schritt E2, der auf Schritt E1 folgt, entspricht Schritt E12.

Nun ist die Kommunikationsvorrichtung 12 eingerichtet und kann in den Steuerverfahren aus FIG. 2 und FIG. 3 eingesetzt werden. Mit den folgenden beispielhaften Schritten wird die eingerichtete Kommunikationsvorrichtung 12 sowohl von dem Inhaber als auch dem Hersteller überprüft.

In einem Schritt E3, der auf Schritt E2 folgt, prüft der Inhaber, ob das erste Zertifikat Z1, das in dem ersten Speicherbereich gespeichert ist, unverändert ist, und bricht das Verfahren ab, falls das Ergebnis dieser Prüfung negativ ist.

In einem Schritt E4, der auf Schritt E3 folgt, prüft der Hersteller, ob das sechste Zertifikat Z6, das in dem ersten Speicherbereich gespeichert ist, unverändert ist, und bricht das Verfahren ab, falls das Ergebnis dieser Prüfung negativ ist.

In einem Schritt E5, der auf Schritt E4 folgt, verifiziert der Inhaber die Zertifikatsignierungsanforderung und das fünfte Zertifikat Z5, das in dem dritten Speicherbereich gespeichert ist, unter Verwendung des dritten Chiffrierschlüssels CS3 und bricht das Verfahren ab, falls das Ergebnis dieser Verifikation negativ ist.

In einem Schritt E32, der auf Schritt E31 folgt, verifiziert der Hersteller die Zertifikatsignierungsanforderung und das siebente Zertifikat Z7, das in dem dritten Speicherbereich gespeichert ist, unter Verwendung des neunten Chiffrierschlüssels CS9 und bricht das Verfahren ab, falls das Ergebnis dieser Verifikation negativ ist.

In einem Schritt E33, der auf Schritt E32 folgt, prüft der Inhaber, ob der zweite Dechiffrierschlüssel DS2, der in dem zweiten Speicherbereich gespeichert ist, von dem Sicherheitsmodul 18 erzeugt worden ist, und bricht das Verfahren ab, falls das Ergebnis dieser Prüfung negativ ist.

In einem Schritt E34, der auf Schritt E33 folgt, prüft der Hersteller, ob der zweite Dechiffrierschlüssel DS2, der in dem zweiten Speicherbereich gespeichert ist, von dem Sicherheitsmodul 18 prüft erzeugt worden ist, und bricht das Verfahren ab, falls das Ergebnis dieser Prüfung negativ ist.

Nun ist die eingerichtete Kommunikationsvorrichtung 12 sowohl von dem Inhaber als auch dem Hersteller überprüft.

In FIG. 9 ist eine dritte Ausführungsform eines Einrichtverfahrens zum Einrichten einer Kommunikationsvorrichtung schematisch dargestellt, wobei mit dieser Ausführungsform beispielhaft die Kommunikationsvorrichtung 12 aus FIG. 4 eingerichtet werden kann. Diese Ausführungsform ähnelt der ersten Ausführungsform, sodass im Folgenden vor Allem die Unterschiede näher erläutert werden.

Ein Schritt F1 entspricht Schritt E1.

In einem Schritt F2, der auf Schritt F1 folgt, stellt der Inhaber das vierte Zertifikat Z4 für den fünften Chiffrierschlüssel CS5 aus und sendet es an die Kommunikationsvorrichtung 12.

In einem Schritt F3, der auf Schritt F2 folgt, speichert der Computer 16 das vierte Zertifikat Z4 in einem vierten Speicherbereich des Sicherheitsmoduls 18.

In einem Schritt F4, der auf Schritt F3 folgt, aktiviert der Computer 16 einen Schreibschutz für den vierten Speicherbereich.

Ein Schritt F5, der auf Schritt F4 folgt, entspricht Schritt E5. Ein Schritt F6, der auf Schritt F5 folgt, entspricht Schritt E6. Ein Schritt F7, der auf Schritt F6 folgt, entspricht Schritt E7. Ein Schritt F8, der auf Schritt F7 folgt, entspricht Schritt E8. Ein Schritt F9, der auf Schritt F8 folgt, entspricht Schritt E9. Ein Schritt F10, der auf Schritt F9 folgt, entspricht Schritt E10.

In einem Schritt F11, der auf Schritt F10 folgt, speichert der Computer 16 das fünfte Zertifikat Z5 in einem dritten Speicherbereich des Sicherheitsmoduls 18. Dann verifiziert das Sicherheitsmodul 18 das fünfte Zertifikat Z5 unter Verwendung des vierten Zertifikats Z4 und bricht das Verfahren ab, falls das Ergebnis dieser Verifikation negativ ist.

In einem alternativen Schritt F11 verifiziert der Computer 16 das fünfte Zertifikat Z5 unter Verwendung des vierten Zertifikats Z4 und bricht das Verfahren ab, falls das Ergebnis dieser Verifikation negativ ist. Dann speichert der Computer 16 das fünfte Zertifikat Z5 in einem dritten Speicherbereich des Sicherheitsmoduls 18.

Ein Schritt F12, der auf Schritt F11 folgt, entspricht Schritt E12.

Nun ist die Kommunikationsvorrichtung 12 eingerichtet und kann in den Sendeverfahren aus FIG. 5 und FIG. 6 eingesetzt werden.

In FIG. 10 ist eine vierte Ausführungsform des Einrichtverfahrens zum Einrichten einer Kommunikationsvorrichtung schematisch dargestellt, die der dritten Ausführungsform ähnelt, sodass im Folgenden vor Allem die Unterschiede näher erläutert werden.

Ein Schritt F13 entspricht Schritt F1. Ein Schritt F14, der auf Schritt F13 folgt, entspricht Schritt F2. Ein Schritt F15, der auf Schritt F14 folgt, entspricht Schritt E15.

In einem Schritt F16, der auf Schritt F15 folgt, stellt der Hersteller ein achtes Zertifikat Z8 für den fünften Chiffrierschlüssel CS5 aus und sendet es an die Kommunikationsvorrichtung 12.

In einem Schritt F17, der auf Schritt F16 folgt, speichert der Computer 16 das vierte Zertifikat Z4 und das achte Zertifikat Z8 in einem vierten Speicherbereich des Sicherheitsmoduls 18.

Ein Schritt F18, der auf Schritt F17 folgt, entspricht Schritt F4. Ein Schritt F19, der auf Schritt F18 folgt, entspricht Schritt F5. Ein Schritt F20, der auf Schritt F19 folgt, entspricht Schritt F6. Ein Schritt F21, der auf Schritt F20 folgt, entspricht Schritt F7. Ein Schritt F22, der auf Schritt F21 folgt, entspricht Schritt F8. Ein Schritt F23, der auf Schritt F22 folgt, entspricht Schritt F9. Ein Schritt F24, der auf Schritt F23 folgt, entspricht Schritt F10. Ein Schritt F25, der auf Schritt F24 folgt, entspricht Schritt E25. Ein Schritt F26, der auf Schritt F25 folgt, entspricht Schritt E26.

In einem Schritt F27, der auf Schritt F26 folgt, speichert der Computer 16 das fünfte Zertifikat Z5 und das siebente Zertifikat Z7 in einem dritten Speicherbereich des Sicherheitsmoduls 18. Dann verifiziert das Sicherheitsmodul 18 das fünfte Zertifikat Z5 unter Verwendung des vierten Zertifikats Z4 verifiziert und bricht das Verfahren ab, falls das Ergebnis dieser Verifikation negativ ist. Außerdem verifiziert das Sicherheitsmodul 18 das siebente Zertifikat Z7 unter Verwendung des achten Zertifikats Z8 und bricht das Verfahren ab, falls das Ergebnis dieser Verifikation negativ ist.

In einem alternativen Schritt F27 verifiziert der Computer 16 das fünfte Zertifikat Z5 unter Verwendung des vierten Zertifikats Z4 und bricht das Verfahren ab, falls das Ergebnis dieser Verifikation negativ ist. Außerdem verifiziert der Computer 16 das siebente Zertifikat Z7 unter Verwendung des achten Zertifikats Z8 und bricht das Verfahren ab, falls das Ergebnis dieser Verifikation negativ ist. Dann speichert der Computer 16 das fünfte Zertifikat Z5 und das siebente Zertifikat Z7 in einem dritten Speicherbereich der Kommunikationsvorrichtung 12 oder des Sicherheitsmoduls 18.

Ein Schritt F28, der auf Schritt F27 folgt, entspricht Schritt F12.

Nun ist die Kommunikationsvorrichtung 12 eingerichtet und kann in den Sendeverfahren aus FIG. 5 und FIG. 6 eingesetzt werden. Mit den folgenden beispielhaften Schritten wird die eingerichtete Kommunikationsvorrichtung 12 sowohl von dem Inhaber als auch dem Hersteller überprüft.

In einem Schritt F29, der auf Schritt F28 folgt, prüft der Inhaber, ob das vierte Zertifikat Z4, das in dem vierten Speicherbereich gespeichert ist, unverändert ist, und bricht das Verfahren ab, falls das Ergebnis dieser Prüfung negativ ist.

In einem Schritt F30, der auf Schritt F29 folgt, der Hersteller prüft, ob das achte Zertifikat Z6, das in dem vierten Speicherbereich gespeichert ist, unverändert ist, und bricht das Verfahren ab abbricht, falls das Ergebnis dieser Prüfung negativ ist.

Ein Schritt F31, der auf Schritt F30 folgt, entspricht Schritt E31. Ein Schritt F32, der auf Schritt F31 folgt, entspricht Schritt E32. Ein Schritt F33, der auf Schritt F32 folgt, entspricht Schritt E33. Ein Schritt F34, der auf Schritt F33 folgt, entspricht Schritt E34.

Nun ist die eingerichtete Kommunikationsvorrichtung 12 sowohl von dem Inhaber als auch dem Hersteller überprüft.

Darüber hinaus kann jede der hier beschriebenen oder dargestellten Verfahren, Prozesse und Aktionen mit Hilfe von ausführbaren Anweisungen (beispielsweise einem Computerprogramm) in einem Mehrzweck- oder Spezialprozessor implementiert und auf einem computerlesbaren Speichermedium (z. B. Festplatte, Speicher oder dergleichen) gespeichert werden, um von einem solchen Prozessor ausgeführt zu werden. Verweise auf ein "computerlesbares Speichermedium" sind so zu verstehen, dass sie auch spezialisierte Schaltungen wie FPGAs, ASICs, Signalverarbeitungsgeräte und andere Geräte umfassen.

Der Ausdruck "A und/oder B" umfasst eines der folgenden drei Szenarien: (i) A, (ii) B, (iii) und B. Der Ausdruck "A und/oder B" hat die gleiche Bedeutung wie "mindestens eines von A oder B" und "mindestens eines von A und B". Außerdem ist der Artikel "ein" nicht als "eines" zu verstehen, d. h. die Verwendung des Ausdrucks "ein Element" schließt nicht aus, dass auch weitere Elemente vorhanden sind. Der Begriff "umfassend" ist in einem offenen Sinne zu verstehen, d.h. dass ein Gegenstand, der "ein Element A umfasst", neben dem Element A auch weitere Elemente umfassen kann.

### Bezugszeichenliste

- 10: Einrichtung
- 12: Kommunikationsvorrichtung
- 14/14': Absendervorrichtung/Empfängervorrichtung
- 16: Computer von 12
- 18: Sicherheitsmodul von 12
- 20: Kommunikationsschnittstelle von 10
- 22'/22": erste/zweite Kommunikationsschnittstelle von 12
- 24: Kommunikationsschnittstelle von 14
- 26: Maschine von 10
- CS1/DS1: erster Chiffrierschlüssel/Dechiffrierschlüssel von 14
- CS2/DS2: zweiter Chiffrierschlüssel/Dechiffrierschlüssel von 12
- CS3/DS3: dritter Chiffrierschlüssel/Dechiffrierschlüssel des Inhabers von 10
- CS4/DS4: vierter Chiffrierschlüssel/Dechiffrierschlüssel von 12
- CS5/DS5: fünfter Chiffrierschlüssel/Dechiffrierschlüssel von 14'
- CS6/DS6: sechster Chiffrierschlüssel/Dechiffrierschlüssel von 12
- CS7/DS7: siebenter Chiffrierschlüssel/Dechiffrierschlüssel von 12
- CS8/DS8: achter Chiffrierschlüssel/Dechiffrierschlüssel von 10
- CS9/DS9: neunter Chiffrierschlüssel/Dechiffrierschlüssel des Herstellers von 10
- ID1: erster Identifikator von 14
- ID2: zweiter Identifikator von 14'
- ID3: dritter Identifikator von 10
- Z1: erstes Zertifikat für CS1 (ausgestellt vom Inhaber von 10)
- Z2: zweites Zertifikat für die Konfigurationsdatei (ausgestellt vom Inhaber und/oder Hersteller von 10)
- Z3: drittes Zertifikat für die Firmware (ausgestellt vom Inhaber und/oder Hersteller von 10 und/oder vom Hersteller von 12)
- Z4: viertes Zertifikat für CS5 (ausgestellt vom Inhaber von 10)
- Z5: fünftes Zertifikat für CS2 (ausgestellt vom Inhaber von 10)
- Z6: sechstes Zertifikat für CS1 (ausgestellt vom Hersteller von 10)
- Z7: siebentes Zertifikat für CS2 (ausgestellt vom Hersteller von 10)
- Z8: achtes Zertifikat für CS5 (ausgestellt vom Hersteller von 10)

## Patentansprüche

1. Verfahren zum Steuern einer Einrichtung (10), wobei
- eine Kommunikationsvorrichtung (12) mit der Einrichtung (10) verbunden ist;
- in einem Schritt S1 die Kommunikationsvorrichtung (12) einen Klartext und eine Signatur von einer Absendervorrichtung (14) empfängt;
- in einem Schritt S2 die Kommunikationsvorrichtung (12) einen ersten Identifikator (ID1), der der Absendervorrichtung (14) zugeordnet ist, und einen ersten Chiffrierschlüssel (CS1) unter Verwendung eines gültigen ersten Zertifikats (Z1) verifiziert, wobei das Verifizieren derart erfolgt, dass unter Verwendung des ersten Zertifikats (Z1) geprüft wird, ob der erste Chiffrierschlüssel (CS1) zu dem ersten Identifikator (ID1) passt, und das Verfahren abbricht, falls das Ergebnis dieser Verifikation negativ ist, wobei das erste Zertifikat (Z1) in einem von der Kommunikationsvorrichtung (12) umfassten Sicherheitsmodul (18) gespeichert ist;
- in einem Schritt S3 die Kommunikationsvorrichtung (12) die empfangene Signatur und den empfangenen Klartext unter Verwendung des ersten Chiffrierschlüssels (CS1) verifiziert und das Verfahren abbricht, falls das Ergebnis dieser Verifikation negativ ist;
- in einem Schritt S4 die Kommunikationsvorrichtung (12) prüft, ob eine Steueranweisung für die Einrichtung (10) in dem Klartext enthalten ist, und das Verfahren abbricht, falls das Ergebnis dieser Prüfung negativ ist;
- in einem Schritt S5 die Kommunikationsvorrichtung (12) prüft, ob eine Berechtigung für die Steueranweisung dem ersten Chiffrierschlüssel (CS1) und dem ersten Identifikator (ID1) zugeordnet ist, und das Verfahren abbricht, falls das Ergebnis dieser Prüfung negativ ist;
- in einem Schritt S6 die Kommunikationsvorrichtung (12) einen Steuerbefehl für die Einrichtung (10) unter Verwendung der Steueranweisung, die in dem wiederhergestellten Klartext enthalten ist, erzeugt; und
- in einem Schritt S7 die Kommunikationsvorrichtung (12) den Steuerbefehl an die Einrichtung (10) sendet, wodurch die Einrichtung (10) gesteuert wird.

2. Verfahren zum Steuern einer Einrichtung (10), wobei
- eine Kommunikationsvorrichtung (12) mit der Einrichtung (10) verbunden ist;
- in einem Schritt S8 die Kommunikationsvorrichtung (12) einen Geheimtext und eine Signatur von einer Absendervorrichtung (14) empfängt, wobei der Geheimtext einen verschlüsselten Klartext darstellt;
- in einem Schritt S9 die Kommunikationsvorrichtung (12) einen ersten Identifikator (ID1), der der Absendervorrichtung (14) zugeordnet ist, und einen ersten Chiffrierschlüssel (CS1) unter Verwendung eines gültigen ersten Zertifikats (Z1) verifiziert, wobei das Verifizieren derart erfolgt, dass unter Verwendung des ersten Zertifikats (Z1) geprüft wird, ob der erste Chiffrierschlüssel (CS1) zu dem ersten Identifikator (ID1) passt, und das Verfahren abbricht, falls das Ergebnis dieser Verifikation negativ ist, wobei das erste Zertifikat (Z1) in einem von der Kommunikationsvorrichtung (12) umfassten Sicherheitsmodul (18) gespeichert ist;
- in einem Schritt S10 die Kommunikationsvorrichtung (12) den empfangenen Geheimtext unter Verwendung eines zweiten Dechiffrierschlüssels (DS2), der der Kommunikationsvorrichtung (12) zugeordnet ist, entschlüsselt, wodurch der Klartext wiederhergestellt wird;
- in einem Schritt S11 die Kommunikationsvorrichtung (12) die empfangene Signatur und den empfangenen Geheimtext oder die empfangene Signatur und den wiederhergestellten Klartext unter Verwendung des ersten Chiffrierschlüssels (CS1) verifiziert und das Verfahren abbricht, falls das Ergebnis dieser Verifikation negativ ist;
- in einem Schritt S12 die Kommunikationsvorrichtung (12) prüft, ob eine Steueranweisung für die Einrichtung (10) in dem Klartext enthalten ist, und das Verfahren abbricht, falls das Ergebnis dieser Prüfung negativ ist;
- in einem Schritt S13 die Kommunikationsvorrichtung (12) prüft, ob eine Berechtigung für die Steueranweisung dem ersten Chiffrierschlüssel (CS1) und dem ersten Identifikator (ID1) zugeordnet ist, und das Verfahren abbricht, falls das Ergebnis dieser Prüfung negativ ist;
- in einem Schritt S14 die Kommunikationsvorrichtung (12) einen Steuerbefehl für die Einrichtung (10) unter Verwendung der Steueranweisung, die in dem wiederhergestellten Klartext enthalten ist, erzeugt; und
- in einem Schritt S15 die Kommunikationsvorrichtung (12) den Steuerbefehl an die Einrichtung (10) sendet, wodurch die Einrichtung (10) gesteuert wird.

3. Verfahren gemäß Anspruch 1 oder 2, wobei
- der erste Chiffrierschlüssel (CS1) in der Kommunikationsvorrichtung (12) gespeichert ist oder wird; und/oder
- der erste Chiffrierschlüssel (CS1) in dem Klartext und/oder in einer die Signatur enthaltenden Signaturdatei enthalten ist und die Kommunikationsvorrichtung (12) den ersten Chiffrierschlüssel (CS1) aus dem Klartext und/oder aus der Signaturdatei extrahiert; und/oder
- die Kommunikationsvorrichtung (12) den ersten Chiffrierschlüssel (CS1) empfangen hat oder empfängt, insbesondere durch Herunterladen von einem Schlüsselserver.

4. Verfahren gemäß einem oder mehreren der Ansprüche 1 bis 3,
- wobei das Prüfen gemäß Schritt S5 oder S13 erfolgt, indem die Kommunikationsvorrichtung (12) prüft, ob die Berechtigung in dem ersten Chiffrierschlüssel (CS1) enthalten ist und/oder in einer Konfigurationsdatei dem ersten Chiffrierschlüssel (CS1) und/oder dem ersten Identifikator (ID1) zugeordnet ist und/oder
- wobei in einem Schritt S16 die Kommunikationsvorrichtung (12) prüft, ob die Konfigurationsdatei unter Verwendung eines gültigen zweiten Zertifikats (Z2) signiert worden ist, und das Verfahren abbricht, falls das Ergebnis dieser Prüfung negativ ist.

5. Verfahren gemäß einem oder mehreren der Ansprüche 1 bis 4, wobei
- das Senden gemäß Schritt S7 oder S15 umfasst, dass die Kommunikationsvorrichtung (12)
- den Steuerbefehl unter Verwendung eines dritten Chiffrierschlüssels (CS3), der der Einrichtung (10) zugeordnet ist, verschlüsselt, und
- den verschlüsselten Steuerbefehl an die Einrichtung (10) sendet;
- oder das Senden gemäß Schritt S7 oder S15 umfasst, dass die Kommunikationsvorrichtung (12)
- den Steuerbefehl unter Verwendung des zweiten Dechiffrierschlüssels (DS2) oder eines vierten Dechiffrierschlüssels (DS4), der der Kommunikationsvorrichtung (12) zugeordnet ist, signiert, wodurch eine Signatur erzeugt wird, und
- den Steuerbefehl und die Signatur an die Einrichtung (10) sendet;
- oder das Senden gemäß Schritt S7 oder S15 umfasst, dass die Kommunikationsvorrichtung (12)
- den Steuerbefehl unter Verwendung eines dritten Chiffrierschlüssels (CS3), der der Einrichtung (10) zugeordnet ist, verschlüsselt,
- den Steuerbefehl oder den verschlüsselten Steuerbefehl unter Verwendung des zweiten Dechiffrierschlüssels (DS2) oder eines vierten Dechiffrierschlüssels (DS4), der der Kommunikationsvorrichtung (12) zugeordnet ist, signiert, wodurch eine Signatur erzeugt wird, und
- den verschlüsselten Steuerbefehl und die Signatur an die Einrichtung (10) sendet.

6. Verfahren gemäß einem oder mehreren der Ansprüche 1 bis 5, wobei
- die Kommunikationsvorrichtung (12) einen Computer (16) umfasst, in dem der erste Chiffrierschlüssel (CS1), der dritte Chiffrierschlüssel (CS3), der erste Identifikator (ID1) und/oder die Konfigurationsdatei gespeichert ist; und/oder
- in dem Sicherheitsmodul (18) ferner das zweite Zertifikat (Z2), der zweite Dechiffrierschlüssel (DS2) und/oder der vierte Dechiffrierschlüssel (DS4) gespeichert ist
und/oder
- die Kommunikationsvorrichtung (12) umfasst
- einen Computer (16), und
- das Sicherheitsmodul (18) mit dem Computer (16) verbunden ist;
- Daten von dem Computer (16) zu dem Sicherheitsmodul (18) und von dem Sicherheitsmodul (18) zu dem Computer (16) übertragen werden; und
- dieses Übertragen von Daten durch einen durch Software und/oder Hardware realisierten Schutz geschützt wird, der ein Mitlesen und/oder Modifizieren der übertragenen Daten verhindert und/oder sicherstellt, dass ausschließlich der Computer (16) dieses Übertragen von Daten steuern kann und/oder dass dieses Übertragen von Daten nur mit Hilfe eines Passworts erfolgen kann, das ausschließlich in dem Computer (16) gespeichert ist
und/oder
- das Sicherheitsmodul (18) einen durch Software und/oder Hardware realisierten Schreibschutz aufweist, der ein Ändern des in dem Sicherheitsmodul (18) gespeicherten ersten Zertifikats (Z1), des in dem Sicherheitsmodul (18) gespeicherten zweiten Zertifikats (Z2), des in dem Sicherheitsmodul (18) gespeicherten zweiten Dechiffrierschlüssels (DS2) und/oder des in dem Sicherheitsmodul (18) gespeicherten vierten Dechiffrierschlüssels (DS4) verhindert; und/oder
- das Sicherheitsmodul (18) einen durch Software und/oder Hardware realisierten Leseschutz aufweist, der ein Lesen des in dem Sicherheitsmodul (18) gespeicherten zweiten Dechiffrierschlüssels (DS2) und/oder des in dem Sicherheitsmodul (18) gespeicherten vierten Dechiffrierschlüssels (DS4) verhindert.

7. Verfahren gemäß einem oder mehreren der Ansprüche 1 bis6, wobei die Steueranweisung und/oder der Steuerbefehl das Senden von Betriebsdaten der Einrichtung (10) an die Absendervorrichtung (14) oder an eine Empfängervorrichtung (14') betrifft.

8. Verfahren zum Senden von Betriebsdaten einer Einrichtung (10) an eine Empfängervorrichtung (14'), wobei
- eine Kommunikationsvorrichtung (12) mit der Einrichtung (10) verbunden ist;
- in einem Schritt B1 die Kommunikationsvorrichtung (12) die Betriebsdaten von der Einrichtung (10) empfängt;
- in einem Schritt B2 die Kommunikationsvorrichtung (12) einen zweiten Identifikator (ID2), der der Empfängervorrichtung (14') zugeordnet ist, und einen fünften Chiffrierschlüssel (CS5) unter Verwendung eines gültigen vierten Zertifikats (Z4) verifiziert, wobei das Verifizieren derart erfolgt, dass unter Verwendung des vierten Zertifikats (Z4) geprüft wird, ob der fünfte Chiffrierschlüssel (CS5) zu dem zweiten Identifikator (ID2) passt, und das Verfahren abbricht, falls das Ergebnis dieser Verifikation negativ ist, wobei das vierte Zertifikat (Z4) in einem von der Kommunikationsvorrichtung (12) umfassten Sicherheitsmodul (18) gespeichert ist;
- in einem Schritt B3 die Kommunikationsvorrichtung (12) prüft, ob eine Berechtigung für den Empfang der Betriebsdaten dem fünften Chiffrierschlüssel (CS5) und dem zweiten Identifikator (ID2) zugeordnet ist, und das Verfahren abbricht, falls das Ergebnis dieser Prüfung negativ ist; und
- in einem Schritt B4 die Kommunikationsvorrichtung (12)
- die Betriebsdaten unter Verwendung eines sechsten Dechiffrierschlüssels (DS6), der der Kommunikationsvorrichtung (12) zugeordnet ist, signiert, wodurch eine Signatur erzeugt wird, und
- die Betriebsdaten und die Signatur an die Empfängervorrichtung (14') sendet.

9. Verfahren zum Senden von Betriebsdaten einer Einrichtung (10) an eine Empfängervorrichtung (14'), wobei
- eine Kommunikationsvorrichtung (12) mit der Einrichtung (10) verbunden ist;
- in einem Schritt B5 die Kommunikationsvorrichtung (12) die Betriebsdaten von der Einrichtung (10) empfängt;
- in einem Schritt B6 die Kommunikationsvorrichtung (12) einen zweiten Identifikator (ID2), der der Empfängervorrichtung (14') zugeordnet ist, und einen fünften Chiffrierschlüssel (CS5) unter Verwendung eines gültigen vierten Zertifikats (Z4) verifiziert, wobei das Verifizieren derart erfolgt, dass unter Verwendung des vierten Zertifikats (Z4) geprüft wird, ob der fünfte Chiffrierschlüssel (CS5) zu dem zweiten Identifikator (ID2) passt, und das Verfahren abbricht, falls das Ergebnis dieser Verifikation negativ ist, wobei das vierte Zertifikat (Z4) in einem von der Kommunikationsvorrichtung (12) umfassten Sicherheitsmodul (18) gespeichert ist;
- in einem Schritt B7 die Kommunikationsvorrichtung (12) prüft, ob eine Berechtigung für den Empfang der Betriebsdaten dem fünften Chiffrierschlüssel (CS5) und dem zweiten Identifikator (ID2) zugeordnet ist, und das Verfahren abbricht, falls das Ergebnis dieser Prüfung negativ ist; und
- in einem Schritt B8 die Kommunikationsvorrichtung (12)
- die Betriebsdaten unter Verwendung des fünften Chiffrierschlüssels (CS5) verschlüsselt,
- die Betriebsdaten oder die verschlüsselten Betriebsdaten unter Verwendung eines sechsten Dechiffrierschlüssels (DS6), der der Kommunikationsvorrichtung (12) zugeordnet ist, signiert, wodurch eine Signatur erzeugt wird, und
- die verschlüsselten Betriebsdaten und die Signatur an die Empfängervorrichtung (14') sendet.

10. Verfahren gemäß Anspruch8 oder 9, wobei
- in einem Schritt B9 die Kommunikationsvorrichtung (12) die empfangenen verschlüsselten Betriebsdaten unter Verwendung des sechsten Dechiffrierschlüssels (DS6) oder eines siebenten Dechiffrierschlüssels (DS7), der mit dem siebenten Chiffrierschlüssel (CS7) korrespondiert, entschlüsselt, wodurch die Betriebsdaten wiederhergestellt werden;
- in einem Schritt B10 die Kommunikationsvorrichtung (12) die empfangenen Betriebsdaten und die empfangene Signatur unter Verwendung eines achten Chiffrierschlüssels (CS8), der mit dem achten Dechiffrierschlüssel (DS8) korrespondiert, verifiziert und das Verfahren abbricht, falls das Ergebnis dieser Verifikation negativ ist; und
- in einem Schritt B11 die Kommunikationsvorrichtung (12)
- die empfangenen verschlüsselten Betriebsdaten unter Verwendung des sechsten Dechiffrierschlüssels (DS6) oder eines siebenten Dechiffrierschlüssels (DS7), der mit dem siebenten Chiffrierschlüssel (CS7) korrespondiert, entschlüsselt, wodurch die Betriebsdaten wiederhergestellt werden, und
- die empfangenen verschlüsselten Betriebsdaten und die empfangene Signatur oder die wiederhergestellten Betriebsdaten und die empfangene Signatur unter Verwendung eines achten Chiffrierschlüssels (CS8), der mit dem achten Dechiffrierschlüssel (DS8) korrespondiert, verifiziert und das Verfahren abbricht, falls das Ergebnis dieser Verifikation negativ ist.

11. Verfahren gemäß Anspruch 7, wobei nach Schritt S7 oder S15 ein Verfahren gemäß einem oder mehreren der Ansprüche 8 bis 9 ausgeführt wird.

12. Kommunikationsvorrichtung (12), umfassend
- Mittel zum Ausführen eines Verfahrens gemäß einem oder mehreren der Ansprüche 1 und 3 bis7;
- Mittel zum Ausführen eines Verfahrens gemäß einem oder mehreren der Ansprüche 2 bis7;
- Mittel zum Ausführen eines Verfahrens gemäß einem oder mehreren der Ansprüche 8 und 10; und/oder
- Mittel zum Ausführen eines Verfahrens gemäß einem oder mehreren der Ansprüche9 bis 10.

13. Computerprogramm, das Befehle umfasst, die bei der Ausführung durch einen Computer (16) oder eine Kommunikationsvorrichtung (12) gemäß Anspruch 12 bewirken, dass dieser Computer (16) beziehungsweise diese Kommunikationsvorrichtung (12) ein Verfahren gemäß einem oder mehreren der Ansprüche 1 und 3 bis7, ein Verfahren gemäß einem oder mehreren der Ansprüche 2 bis 7, ein Verfahren gemäß einem oder mehreren der Ansprüche 8 und 10 und/oder ein Verfahren gemäß einem oder mehreren der Ansprüche 9 bis10 ausführt.

14. Computerlesbares Medium,
- auf dem das Computerprogramm gemäß Anspruch 13 gespeichert ist; und/oder
- das Befehle umfasst, die bei der Ausführung durch einen Computer (16) oder eine Kommunikationsvorrichtung (12) gemäß Anspruch 12 bewirken, dass dieser Computer (16) beziehungsweise diese Kommunikationsvorrichtung (12) ein Verfahren gemäß einem oder mehreren der Ansprüche 1 und 3 bis7, ein Verfahren gemäß einem oder mehreren der Ansprüche 2 bis 7, ein Verfahren gemäß einem oder mehreren der Ansprüche 8 und 10 und/oder ein Verfahren gemäß einem oder mehreren der Ansprüche 9 bis 10 ausführt.

15. Datenträgersignal, das das Computerprogramm gemäß Anspruch 14 überträgt.

## Claims

1. Method for controlling a apparatus (10), wherein
- a communication device (12) is connected to the apparatus (10);
- in a stepS1, the communication device (12) receives plaintext and a signature from a sender device (14);
- in a stepS2 , the communication device (12) verifies a first identifier (ID1) associated with the sender device (14) and a first encryption key (CS1) using a valid first certificate (Z1), wherein the verification is performed by using the first certificate (Z1) to check whether the first encryption key (CS1) matches the first identifier (ID1), and terminating the method if the result of this verification is negative, wherein the first certificate (Z1) is stored in a security module (18) comprised in the communication device (12);
- in a stepS3 , the communication device (12) verifies the received signature and the received plaintext using the first encryption key (CS1) and terminates the method if the result of this verification is negative;
- in a stepS4 , the communication device (12) checks whether a control instruction for the apparatus (10) is contained in the plaintext and terminates the method if the result of this check is negative;
- in one stepS5 the communication device (12) checks whether an authorisation for the control instruction is associated with the first encryption key (CS1) and with the first identifier (ID1), and aborts the method if the result of this check is negative;
- in a stepS6 , the communication device (12) generates a control command for the apparatus (10) using the control instruction contained in the recovered plaintext; and
- in a stepS7 , the communication device (12) sends the control command to the apparatus (10), whereby the apparatus (10) is controlled.

2. Method for controlling a apparatus (10), wherein
- a communication device (12) is connected to the apparatus (10);
- in a stepS8 , the communication device (12) receives a ciphertext and a signature from a sender device (14), wherein the ciphertext represents an encrypted plaintext;
- in a stepS9 , the communication device (12) verifies a first identifier (ID1) associated with the sender device (14) and a first encryption key (CS1) using a valid first certificate (Z1), wherein the verification is performed by checking, using the first certificate (Z1), whether the first encryption key (CS1) matches the first identifier (ID1), and terminates the method if the result of this verification is negative, wherein the first certificate (Z1) is stored in a security module (18) comprised in the communication device (12);
- in a stepS10, the communication device (12) decrypts the received ciphertext using a second decryption key (DS2) associated with the communication device (12), whereby the plaintext is restored;
- in a stepS11, the communication device (12) verifies the received signature and the received ciphertext or the received signature and the restored plaintext using the first encryption key (CS1) and terminates the method if the result of this verification is negative;
- in a stepS12 , the communication device (12) checks whether a control instruction for the apparatus (10) is contained in the plaintext and terminates the method if the result of this check is negative;
- in a stepS13 , the communication device (12) checks whether an authorisation for the control instruction is associated with the first encryption key (CS1) and with the first identifier (ID1) and terminates the method if the result of this check is negative;
- in a stepS14 , the communication device (12) generates a control command for the apparatus (10) using the control instruction contained in the recovered plaintext; and
- in a stepS15 , the communication device (12) sends the control command to the apparatus (10), whereby the apparatus (10) is controlled.

3. Method according to claim 1 or2 , wherein
- the first encryption key (CS1) is or is being stored in the communication device (12); and/or
- the first encryption key (CS1) is contained in the plain text and/or in a signature file containing the signature, and the communication device (12) extracts the first encryption key (CS1) from the plain text and/or from the signature file; and/or
- the communication device (12) has received or receives the first encryption key (CS1), in particular by download from a key server.

4. Method according to one or more of claims 1 to3 ,
- wherein the checking according to step S5 or S13 is performed by the communication device (12) checking whether the authorisation is contained in the first encryption key (CS1) and/or is associated, in a configuration file, with the first encryption key (CS1) and/or with the first identifier (ID1) and/or
- wherein in a stepS16 the communication device (12) checks whether the configuration file has been signed using a valid second certificate (Z2) and terminates the method if the result of this check is negative.

5. Method according to one or more of claims 1 to 4, wherein
- the sending according to step S7 or S15 comprises that the communication device (12)
- encrypts the control command using a third encryption key (CS3) associated with the apparatus (10), and
- sends the encrypted control command to the apparatus (10);
- or the sending according to step S7 or S15 comprises that the communication device (12)
- signs the control command using the second decryption key (DS2) or a fourth decryption key (DS4) associated with the communication device (12), whereby a signature is generated, and
- sends the control command and the signature to the apparatus (10);
- or the sending according to step S7 or S15 comprises that the communication device (12)
- encrypts the control command using a third encryption key (CS3) associated with the apparatus (10),
- signs the control command or the encrypted control command using the second decryption key (DS2) or a fourth decryption key (DS4) associated with the communication device (12), whereby a signature is generated, and
- sends the encrypted control command and the signature to the apparatus (10).

6. Method according to one or more of claims 1 to 5, wherein
- the communication device (12) comprises a computer (16) in which the first encryption key (CS1), the third encryption key (CS3), the first identifier (ID1) and/or the configuration file are stored; and/or
- the second certificate (Z2), the second decryption key (DS2) and/or the fourth decryption key (DS4) are also stored in the security module (18)
and/or
- the communication device (12) comprises
- a computer (16), and
- the security module (18) is connected to the computer (16);
- data is transferred from the computer (16) to the security module (18) and from the security module (18) to the computer (16); and
- this transfer of data is protected by software and/or hardware protection that prevents the transferred data from being read and/or modified and/or ensures that only the computer (16) can control this transfer of data and/or that this transfer of data can only take place with the aid of a password that is stored exclusively in the computer (16)
and/or
- the security module (18) has write protection implemented by software and/or hardware which prevents modification of the first certificate (Z1) stored in the security module (18), of the second certificate (Z2) stored in the security module (18), of the second decryption key (DS2) stored in the security module (18) and/or of the fourth decryption key (DS4) stored in the security module (18); and/or
- the security module (18) has read protection implemented by software and/or hardware, which prevents the second decryption key (DS2) stored in the security module (18) and/or the fourth decryption key (DS4) stored in the security module (18) from being read.

7. Method according to one or more of claims 1 to 6, wherein the control instruction and/or control command relates to sending operating data from the apparatus (10) to the sending device (14) or to a receiving device (14').

8. Method for sending operating data from a apparatus (10) to a receiving device (14'),
wherein
- a communication device (12) is connected to the apparatus (10);
- in a stepB1, the communication device (12) receives the operating data from the apparatus (10);
- in a stepB2, the communication device (12) verifies a second identifier (ID2) associated with the receiving device (14') and a fifth encryption key (CS5) using a valid fourth certificate (Z4), wherein the verification is performed by checking, using the fourth certificate (Z4), whether the fifth encryption key (CS5) matches the second identifier (ID2), and terminating the method if the result of this verification is negative, wherein the fourth certificate (Z4) is stored in a security module (18) comprised in the communication device (12);
- in a stepB3 , the communication device (12) checks whether an authorization to receive the operating data is associated with the fifth encryption key (CS5) and to the second identifier (ID2), and the method is terminated if the result of this check is negative; and
- in a stepB4 , the communication device (12)
- signs the operating data using a sixth decryption key (DS6) associated with the communication device (12), thereby generating a signature, and
- sends the operating data and the signature to the receiving device (14').

9. Method for sending operating data from an apparatus (10) to a receiving device (14'), wherein
- a communication device (12) is connected to the apparatus (10);
- in a stepB5, the communication device (12) receives the operating data from the apparatus (10);
- in a stepB6 , the communication device (12) verifies a second identifier (ID2) associated with the receiving device (14') and a fifth encryption key (CS5) using a valid fourth certificate (Z4), wherein the verification is performed by checking, using the fourth certificate (Z4), whether the fifth encryption key (CS5) matches the second identifier (ID2), and terminates the method if the result of this verification is negative, wherein the fourth certificate (Z4) is stored in a security module (18) comprised in the communication device (12);
- in a stepB7, the communication device (12) checks whether an authorization to receive the operating data is associated with the fifth encryption key (CS5) and with the second identifier (ID2), and the method is terminated if the result of this check is negative; and
- in a stepB8, the communication device (12)
- encrypts the operating data using the fifth encryption key (CS5),
- signs the operating data or the encrypted operating data using a sixth decryption key (DS6) associated with the communication device (12), whereby a signature is generated, and
- sending the encrypted operating data and the signature to the receiving device (14').

10. Method according to claim 8 or 9, wherein
- in a stepB9 , the communication device (12) decrypts the received encrypted operating data using the sixth decryption key (DS6) or a seventh decryption key (DS7) corresponding to the seventh encryption key (CS7), thereby restoring the operating data;
- in a stepB10 , the communication device (12) verifies the received operating data and the received signature using an eighth encryption key (CS8) corresponding to the eighth decryption key (DS8) and terminates the method if the result of this verification is negative; and
- in a stepB11, the communication device (12)
- decrypts the received encrypted operating data using the sixth decryption key (DS6) or a seventh decryption key (DS7) corresponding to the seventh encryption key (CS7), whereby the operating data is restored, and
- verifies the received encrypted operating data and the received signature or the restored operating data and the received signature using an eighth encryption key (CS8) corresponding to the eighth decryption key (DS8), and terminates the method if the result of this verification is negative.

11. Method according to claim 7, wherein after step S7 or S15, a method according to one or more of claims 8 to 9 is performed.

12. Communication device (12) comprising
- means for executing a method according to one or more of claims 1 and 3 to 7;
- means for executing a method according to one or more of claims 2 to 7;
- means for executing a method according to one or more of claims 8 and 10; and/or
- means for executing a method according to one or more of claims 9 to 10.

13. Computer program comprising instructions which, when executed by a computer (16) or by a communication device (12) according to claim 12, cause the computer (16) or the communication device (12) to perform a method according to one or more of claims 1 and 3 to7, a method according to one or more of claims 2 to 7, a method according to one or more of claims 8 and 10, and/or a method according to one or more of claims 9 to 10.

14. Computer-readable medium
- on which the computer program according to claim 13 is stored; and/or
- which comprises instructions which, when executed by a computer (16) or a communication device (12) according to claim 12, cause this computer (16) or this communication device (12) to perform a method according to one or more of claims 1 and 3 to 7, a method according to one or more of claims 2 to 7, a method according to one or more of claims 8 and 10, and/or a method according to one or more of claims 9 to 10.

15. Data carrier signal that transmits the computer program according to claim 14.

## Revendications

1. Méthode pour commander un dispositif (10), où
- un dispositif de communication (12) est connecté au dispositif (10) ;
- dans une étapeS1 , le dispositif de communication (12) reçoit un texte en clair et une signature d'un dispositif transmetteur (14) ;
- dans une étapeS2 , le dispositif de communication (12) reçoit un premier identifiant (ID1) attribué au dispositif transmetteur (14) et une première clé de chiffrement (CS1) à l'aide d'un premier certificat valide (Z1), où la vérification est effectuée de telle sorte qu'à l'aide du premier certificat (Z1), il est vérifié si la première clé de chiffrement (CS1) correspond au premier identifiant (ID1), et interrompt la méthode si le résultat de cette vérification est négatif, où le premier certificat (Z1) est stocké dans un module de sécurité (18) compris dans le dispositif de communication (12) ;
- dans une étape53 , le dispositif de communication (12) vérifie la signature reçue et le texte en clair reçu à l'aide de la première clé de chiffrement (CS1) et interrompt la méthode si le résultat de cette vérification est négatif ;
- dans une étapeS4 , le dispositif de communication (12) vérifie si une instruction de commande pour le dispositif (10) est contenue dans le texte en clair et interrompt la méthode si le résultat de cette vérification est négatif ;
- dans une étapeS5 , le dispositif de communication (12) vérifie si une autorisation pour l'instruction de commande est attribuée à la première clé de chiffrement (CS1) et au premier identifiant (ID1) et interrompt la méthode si le résultat de cette vérification est négatif ;
- dans une étapeS6 , le dispositif de communication (12) génère une commande de contrôle pour le dispositif (10) en utilisant l'instruction de contrôle contenue dans le texte en clair restauré ; et
- dans une étapeS7 , le dispositif de communication (12) envoie la commande de contrôle au dispositif (10), ce qui permet de contrôler le dispositif (10).

2. Méthode de commande d'un dispositif (10), où
- un dispositif de communication (12) est connecté au dispositif (10) ;
- dans une étapeS8 , le dispositif de communication (12) reçoit un texte crypté et une signature d'un dispositif transmetteur (14), où le texte crypté représente un texte en clair crypté ;
- dans une étapeS9 , le dispositif de communication (12) vérifie un premier identifiant (ID1) associé au dispositif transmetteur (14) et une première clé de chiffrement (CS1) à l'aide d'un premier certificat valide (Z1), où la vérification est effectuée de telle sorte qu'à l'aide du premier certificat (Z1), il est vérifié si la première clé de chiffrement (CS1) correspond au premier identifiant (ID1), et interrompt la méthode si le résultat de cette vérification est négatif, où le premier certificat (Z1) est stocké dans un module de sécurité (18) compris dans le dispositif de communication (12) ;
- dans une étapeS10 , le dispositif de communication (12) décrypte le texte crypté reçu à l'aide d'une deuxième clé de décryptage (DS2) attribuée au dispositif de communication (12), ce qui permet de restaurer le texte en clair ;
- dans une étapeS11 , le dispositif de communication (12) vérifie la signature reçue et le texte crypté reçu ou la signature reçue et le texte en clair restauré à l'aide de la première clé de chiffrement (CS1) et interrompt la méthode si le résultat de cette vérification est négatif ;
- dans une étapeS12 , le dispositif de communication (12) vérifie si une instruction de commande pour le dispositif (10) est contenue dans le texte en clair et interrompt la méthode si le résultat de cette vérification est négatif ;
- dans une étapeS13 , le dispositif de communication (12) vérifie si une autorisation pour l'instruction de commande est attribuée à la première clé de chiffrement (CS1) et au premier identifiant (ID1) et interrompt la méthode si le résultat de cette vérification est négatif ;
- dans une étapeS14 , le dispositif de communication (12) génère une commande de contrôle pour le dispositif (10) en utilisant l'instruction de contrôle contenue dans le texte en clair restauré ; et
- dans une étapeS15 , le dispositif de communication (12) envoie la commande de contrôle au dispositif (10), ce qui permet de contrôler le dispositif (10).

3. Méthode selon la revendication 1 ou 2, dans lequel
- la première clé de chiffrement (CS1) est ou sera stockée dans le dispositif de communication (12) ; et/ou
- la première clé de chiffrement (CS1) est contenue dans le texte en clair et/ou dans un fichier de signature contenant la signature, et le dispositif de communication (12) extrait la première clé de chiffrement (CS1) du texte en clair et/ou du fichier de signature ; et/ou
- le dispositif de communication (12) a reçu ou reçoit la première clé de chiffrement (CS1), en particulier par téléchargement à partir d'un serveur de clés.

4. Méthode selon une ou plusieurs des revendications 1 à3 ,
- où la vérification selon l'étape S5 ou S13 est effectuée de telle sorte que le dispositif de communication (12) vérifie si l'autorisation est contenue dans la première clé de chiffrement (CS1) et/ou est attribuée, dans un fichier de configuration, à la première clé de chiffrement (CS1) et/ou au premier identifiant (ID1) et/ou
- où dans une étapeS16 , le dispositif de communication (12) vérifie si le fichier de configuration a été signé à l'aide d'un deuxième certificat valide (Z2) et interrompt la méthode si le résultat de cette vérification est négatif.

5. Méthode selon une ou plusieurs des revendications 1 à 4, dans lequel
- l'envoi selon l'étape S7 ou S15 comprend que le dispositif de communication (12)
- crypte la commande de contrôle en utilisant une troisième clé de chiffrement (CS3) attribuée au dispositif (10), et
- envoie la commande de contrôle chiffrée au dispositif (10) ;
- ou l'envoi selon l'étape S7 ou S15 comprend que le dispositif de communication (12)
- signe la commande de contrôle en utilisant la deuxième clé de déchiffrement (DS2) ou une quatrième clé de déchiffrement (DS4) attribuée au dispositif de communication (12), générant ainsi une signature, et
- envoie la commande de contrôle et la signature au dispositif (10) ;
- ou l'envoi selon l'étape S7 ou S15 comprend que le dispositif de communication (12)
- crypte la commande de contrôle à l'aide d'une troisième clé de chiffrement (CS3) attribuée au dispositif (10),
- signe la commande de contrôle ou la commande de contrôle chiffrée à l'aide de la deuxième clé de déchiffrement (DS2) ou d'une quatrième clé de déchiffrement (DS4) attribuée au dispositif de communication (12), générant ainsi une signature, et
- envoie la commande de contrôle cryptée et la signature à l'installation (10).

6. Méthode selon une ou plusieurs des revendications 1 à 5, où
- le dispositif de communication (12) comprend un ordinateur (16) dans lequel sont stockés la première clé de chiffrement (CS1), la troisième clé de chiffrement (CS3), le premier identifiant (ID1) et/ou le fichier de configuration ; et/ou
- dans le module de sécurité (18) sont stocke en outre le deuxième certificat (Z2), la deuxième clé de déchiffrement (DS2) et/ou la quatrième clé de déchiffrement (DS4)
et/ou
- le dispositif de communication (12) comprend
- un ordinateur (16), et
- le module de sécurité (18) est connecté à l'ordinateur (16) ;
- des données sont transmises de l'ordinateur (16) au module de sécurité (18) et du module de sécurité (18) à l'ordinateur (16) ; et
- cette transmission de données est protégée par une protection réalisée par logiciel et/ou par matériel qui empêche une lecture et/ou une modification des données transmises et/ou garantit que seul l'ordinateur (16) peut contrôler cette transmission de données et/ou que cette transmission de données ne peut avoir lieu qu'à l'aide d'un mot de passe enregistré exclusivement dans l'ordinateur (16)
et/ou
- le module de sécurité (18) comporte une protection en écriture réalisée par logiciel et/ou par matériel qui empêche une modification du premier certificat (Z1) stocké dans le module de sécurité (18), du deuxième certificat (Z2) stocké dans le module de sécurité (18), de la deuxième clé de déchiffrement (DS2) stocké dans le module de sécurité (18) et/ou de la quatrième clé de déchiffrement (DS4) stocké dans le module de sécurité (18) ; et/ou
- le module de sécurité (18) comporte une protection en lecture réalisée par logiciel et/ou matériel qui empêche la lecture de la deuxième clé de déchiffrement (DS2) enregistrée dans le module de sécurité (18) et/ou de la quatrième clé de déchiffrement (DS4) enregistrée dans le module de sécurité (18).

7. Méthode selon une ou plusieurs des revendications 1 à 6, où l'instruction de commande et/ou la commande de contrôle concerne l'envoi de données de fonctionnement du dispositif (10) au dispositif transmetteur (14) ou à un dispositif récepteur (14').

8. Méthode pour envoyer des données de fonctionnement d'un dispositif (10) à un dispositif récepteur (14'), où
- un dispositif de communication (12) est connecté au dispositif (10) ;
- dans une étapeB1 , le dispositif de communication (12) reçoit les données de fonctionnement du dispositif (10) ;
- dans une étapeB2 , le dispositif de communication (12) vérifie un deuxième identifiant (ID2), attribué au dispositif récepteur (14'), et une cinquième clé de chiffrement (CS5) à l'aide d'un quatrième certificat valide (Z4), où la vérification est effectuée de telle sorte qu'à l'aide du quatrième certificat (Z4), il est vérifié si la cinquième clé de chiffrement (CS5) correspond au deuxième identifiant (ID2), et interrompt la méthode si le résultat de cette vérification est négatif, où le quatrième certificat (Z4) est stocké dans un module de sécurité (18) compris dans le dispositif de communication (12) ;
- dans une étapeB3 , le dispositif de communication (12) vérifie si une autorisation de réception des données de fonctionnement est attribuée à la cinquième clé de chiffrement (CS5) et au deuxième identifiant (ID2) et interrompt la méthode si le résultat de cette vérification est négatif ; et
- dans une étapeB4 , le dispositif de communication (12)
- signe les données de fonctionnement à l'aide d'une sixième clé de déchiffrement (DS6) attribuée au dispositif de communication (12), générant ainsi une signature, et
- envoie les données de fonctionnement et la signature au dispositif récepteur (14').

9. Méthode pour envoyer des données de fonctionnement d'un dispositif (10) à un dispositif récepteur (14'), où
- un dispositif de communication (12) est connecté au dispositif (10) ;
- dans une étapeB5 , le dispositif de communication (12) reçoit les données de fonctionnement du dispositif (10) ;
- dans une étapeB6 , le dispositif de communication (12) vérifie un deuxième identifiant (ID2) attribué au dispositif récepteur (14') et une cinquième clé de chiffrement (CS5) à l'aide d'un quatrième certificat valide (Z4), la vérification étant effectuée de telle sorte qu'à l'aide du quatrième certificat (Z4), il est vérifié si la cinquième clé de chiffrement (CS5) correspond au deuxième identifiant (ID2), et interrompt la méthode si le résultat de cette vérification est négatif, où le quatrième certificat (Z4) est stocké dans un module de sécurité (18) compris dans le dispositif de communication (12) ;
- dans une étapeB7 , le dispositif de communication (12) vérifie si une autorisation de réception des données de fonctionnement est attribuée à la cinquième clé de chiffrement (CS5) et au deuxième identifiant (ID2) et interrompt la méthode si le résultat de cette vérification est négatif ; et
- dans une étapeB8 , le dispositif de communication (12)
- crypte les données de fonctionnement en utilisant la cinquième clé de chiffrement (CS5),
- signe les données de fonctionnement ou les données de fonctionnement cryptées à l'aide d'une sixième clé de décryptage (DS6) attribuée au dispositif de communication (12), ce qui génère une signature, et
- envoyer les données de fonctionnement cryptées et la signature au dispositif récepteur (14').

10. Méthode selon la revendication 8 ou 9, où
- dans une étapeB9 , le dispositif de communication (12) décrypte les données de fonctionnement cryptées reçues à l'aide de la sixième clé de décryptage (DS6) ou d'une septième clé de décryptage (DS7) correspondant à la septième clé de cryptage (CS7), ce qui permet de restaurer les données de fonctionnement;
- dans une étapeB10 , le dispositif de communication (12) vérifie les données de fonctionnement reçues et la signature reçue à l'aide d'une huitième clé de chiffrement (CS8) qui correspond à la huitième clé de déchiffrement (DS8) et interrompt la méthode si le résultat de cette vérification est négatif ; et
- dans une étapeB11 , le dispositif de communication (12)
- décrypte les données de fonctionnement cryptées reçues à l'aide de la sixième clé de décryptage (DS6) ou d'une septième clé de décryptage (DS7) qui correspond à la septième clé de cryptage (CS7), ce qui permet de restaurer les données de fonctionnement, et
- vérifie les données de fonctionnement cryptées reçues et la signature reçue ou les données de fonctionnement restaurées et la signature reçue à l'aide d'une huitième clé de chiffrement (CS8) qui correspond à la huitième clé de décryptage (DS8), et interrompt la méthode si le résultat de cette vérification est négatif.

11. Méthode selon la revendication 7, où, après l'étape S7 ou S15, une méthode selon une ou plusieurs des revendications 8 à 9 est exécuté.

12. Dispositif de communication (12) comprenant
- des moyens pour exécuter une méthode selon une ou plusieurs des revendications 1 et 3 à 7 ;
- des moyens pour exécuter une méthode selon une ou plusieurs des revendications 2 à 7 ;
- des moyens pour exécuter une méthode selon une ou plusieurs des revendications 8 et 10 ; et/ou
- des moyens pour exécuter une méthode selon une ou plusieurs des revendications 9 à 10.

13. Programme informatique comprenant des instructions qui, lorsqu'elles sont exécutées par un ordinateur (16) ou un dispositif de communication (12) selon la revendication 12, amènent cet ordinateur (16) ou ce dispositif de communication (12) à exécuter une méthode selon une ou plusieurs des revendications 1 et 3 à 7, une méthode selon une ou plusieurs des revendications2 à 7, une méthode selon une ou plusieurs des revendications 8 et 10 et/ou une méthode selon une ou plusieurs des revendications 9 à 10.

14. Support lisible par ordinateur
- sur lequel est stocké le programme informatique selon la revendication 13 ; et/ou
- qui comprend des instructions qui, lorsqu'elles sont exécutées par un ordinateur (16) ou un dispositif de communication (12) selon la revendication 12, amènent cet ordinateur (16) ou ce dispositif de communication (12) à mettre en œuvre une méthode selon une ou plusieurs des revendications 1 et 3 à 7, une méthode selon une ou plusieurs des revendications 2 à 7, une méthode selon une ou plusieurs des revendications 8 et 10 et/ou une méthode selon une ou plusieurs des revendications 9 à 10.

15. Signal de support de données transmettant le programme informatique selon la revendication 14.
